# EUROPEAN PATENT APPLICATION

(11) **EP 4 668 878 A1**
(43) Date of publication of application: **24.12.2025**
(21) Application number: 23922010.6
(22) Date of filing: 17.02.2023
(51) Int. Cl.: H04W 52/02

(54) **FORWARDING CONTROL METHOD, INFORMATION SENDING METHOD, REPEATER, AND NETWORK DEVICE**

(71) Applicant: Fujitsu Limited, Kawasaki-shi, Kanagawa 211-8588 (JP)
(72) Inventor: JIANG, Qinyan, Beijing 100022 (CN); ZHANG, Lei, Beijing 100022 (CN)
(74) Representative: Haseltine Lake Kempner LLP
(86) International application number: PCT/CN2023/076937
(87) International publication number: WO 2024/168876

(57) **Abstract**

Embodiments of this disclosure provide a forwarding control method, an information transmission method, a repeater and a network device. The repeater includes: a mobile termination configured to transition from an RRC connected state to a non-RRC connected state, wherein the non-RRC connected state comprises an RRC inactive state or an RRC idle state; and a forwarding unit configured to forward a signal.

## Description

### Technical Field

This disclosure relates to the field of communication technologies.

### Background

Compared with legacy 3G (third generation mobile communication technology) and 4G (fourth generation mobile communication technology) systems, a 5G (fifth generation mobile communication technology) system is able to provide larger bandwidths and higher data rates, and is able to support more types of terminals and vertical services.

For this reason, 5G systems are also deployed at new spectra in addition to legacy telecommunications spectra, and frequencies of the spectra are obviously higher than those of legacy telecommunications spectra used in 3G and 4G systems. For example, a 5G system may be deployed in a millimeter waveband (such as 28 GHz, 38GHz, 60 GHz, and higher wavebands).

According to the principle of propagation of wireless signals, the higher a carrier frequency, the more severe a fading experienced by signals during transmission. Therefore, in actual deployment, a 5G system needs a cell coverage enhancement method more than 3G and 4G systems need, especially a 5G system deployed in a millimeter waveband. Hence, how to better enhance cell coverage of a 5G system has become an urgent problem to be solved.

In order to better solve the coverage problem of cellular mobile communication systems in practical deployment, use of a radio frequency (RF) relay/repeater to amplify and forward signals between a terminal equipment (UE) and a network device is commonly used means of deployment. RF repeaters are widely used in actual deployment of 3G and 4G systems. Generally speaking, an RF repeater is a device that amplifies and forwards signals between devices in the RF domain. That is, an RF repeater is a non-regenerative relay node, which only directly amplifies and forwards all received signals.

However, legacy RF repeaters are incapable of exchanging information with other devices (e.g. network devices/terminal equipments, etc.). Specifically, in terms of reception, legacy RF repeaters do not support measurement/demodulation/decoding of forwarded signals, nor do they receive signals other than the forwarded signals. In terms of transmission, legacy RF repeaters merely amplify and forward signals, and do not support generating signals and transmitting signals generated by themselves. Therefore, forwarding behaviors of legacy RF repeaters are not controlled by the network (e.g. via network devices, etc.).

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

A network controlled repeater (NCR) scheme is proposed in 3GPP Rel-18 to enhance NR coverage, so as to forward signals between a network device and a terminal equipment. NCR may directly communicate with the network device via control links to assist in forwarding operations of the NCR.

ON/OFF state of legacy repeaters are typically manually set, which are unable to dynamically match data transmission between network devices and UEs. In general, data transmission does not occur constantly between network devices and terminal equipments. If the repeater remains ON even when there is no data transmission between a network device and a terminal equipment, unnecessary power consumption will be increased on one hand, and on the other hand, interference to other devices may be caused, thereby reducing network throughput. Therefore, compared to legacy repeaters, it is needed that the NCR has a function of controlling ON/OFF of repeaters.

At present, for a case where an NCR is in a radio resource control (RRC) connected state, 3GPP has agreed to support a method of enabling an NCR to control ON/OFF states of a forwarding unit thereof according to control information of a network device. However, a method for controlling behaviors of an NCR in a non-RRC connected state has not been proposed yet.

In order to solve at least one of the above problems, embodiments of this disclosure provide a forwarding control method, an information transmission method, a repeater and a network device.

According to one aspect of the embodiments of this disclosure, there is provided a repeater, including:
a mobile termination configured to transition from an RRC connected state to a non-RRC connected state, wherein the non-RRC connected state comprises an RRC inactive state or an RRC idle state; and
a forwarding unit configured to forward a signal.

According to another aspect of the embodiments of this disclosure, there is provided a network device, including:
a transmitting unit configured to transmit a first RRC release message and/or other signaling than the first RRC release message to a mobile termination of a repeater, the first RRC release message and/or the other signaling comprising one or more of first information, second information, third information, relevant information of a first timer, first indication information, second indication information, third indication information and fourth indication information;
wherein the first information is used to indicate a forwarded cell,
the second information is used to indicate whether to update or change a forwarded cell,
the third information is used to indicate whether the forwarding unit forwards or does not forward a signal after receiving the first RRC release message and/or after transitioning to a non-RRC connected state and/or when being in the non-RRC connected state;
the first timer is started upon receiving the first RRC release message, and/or is stopped upon receiving an RRC resume message or an RRC establishment message, or upon receiving the first RRC release message again;
the first indication information is used to indicate a backhaul link beam used by the forwarding unit of the repeater in performing forwarding before a mobile termination of the repeater receives the first RRC release message and/or before a mobile termination of the repeater transitions to the non-RRC connected state and/or when a mobile termination of the repeater is in the RRC connected state and/or after a mobile termination of the repeater receives the first RRC release message and/or after a mobile termination of the repeater transitions to a non-RRC connected state and/or when a mobile termination of the repeater is in the non-RRC connected state,
the second indication information is dedicated used to indicate a backhaul link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state,
the third indication information is used to indicate an access link beam used by the forwarding unit of the repeater in performing forwarding before the mobile termination of the repeater receives the first RRC release message and/or before the mobile termination of the repeater transitions to the non-RRC connected state and/or when the mobile termination of the repeater is in the RRC connected state and/or after the mobile termination of the repeater receives the first RRC release message and/or after the mobile termination of the repeater transitions to the non-RRC connected state and/or when the mobile termination of the repeater is in the non-RRC connected state,
and the fourth indication information is dedicated used to indicate an access link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state.

According to a further aspect of the embodiments of this disclosure, there is provided a communication system, including the repeater as described in the one aspect and/or the network device as described in the other aspect.

An advantage of the embodiments of this disclosure exists in that the repeater may forward signals after it enters the non-RRC connected state, so that the time resources/beams to which the ON state of the forwarding unit corresponds may be enabled to match with the time resources/beams of data transmission between the network device and the terminal equipment, thereby saving power consumption of the repeater, reducing interference, and improving network throughput.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of a communication system of embodiments of this disclosure;
FIG. 2 is a schematic diagram of a forwarding control method of embodiments of this disclosure;
FIG. 3 is a schematic diagram of the forwarding control method of the embodiments of this disclosure;
FIG. 4 is a schematic diagram of the forwarding control method of the embodiments of this disclosure;
FIG. 5 is a schematic diagram of the forwarding control method of the embodiments of this disclosure;
FIG. 6 is a schematic diagram of the forwarding control method of the embodiments of this disclosure;
FIG. 7 is a schematic diagram of a repeater of embodiments of this disclosure;
FIG. 8 is a schematic diagram of an information transmission method of embodiments of this disclosure;
FIG. 9 is a schematic diagram of a network device of embodiments of this disclosure; and
FIG. 10 is a schematic diagram of an electronic device of embodiments of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and higher-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), IAB donor etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), an IAB-MT, or a station, etc.

The terminal equipment may include but not limited to the following devices: a cellular phone, a personal digital assistant (PDA), a wireless modem, a wireless communication device, a hand-held device, an machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

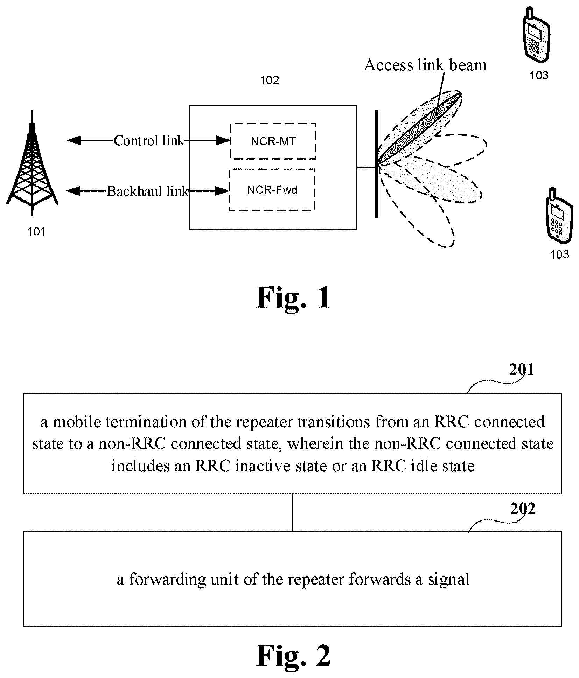

FIG. 1 is schematic diagram of an NCR of embodiments of this disclosure. As shown in FIG. 1, NCR 102 is configured between a network device 101 and a terminal equipment 103. NCR 102 may include the following two modules/components: a mobile termination of the repeater (NCR-MT) and a forwarding unit of the repeater. (NCR-Fwd). The NCR-Fwd may also be referred to as a routing unit of the NCR (NCR-RU). The NCR-MT is used for communication with the network device (information exchange), the NCR-Fwd is used for forwarding signals between the network device and the terminal equipment, and the NCR-MT and NCR-Fwd are functional entities, with functions thereof being implemented by identical or different hardware modules.

As shown in FIG. 1, the NCR of the embodiments of this disclosure may have three links: a control link (C-link), a backhaul link (BH link) for forwarding, and an access link (AC link, also referred to as an NCR-UE link), wherein the C-link is used for communication between the NCR and the network device, the BH link is used by the repeater to receive signals to be forwarded from the network device, or forward signals from the terminal equipment to the network device, and the AC link is used by the repeater to forward signals from the network device to the terminal equipment, or receive signals to be forwarded from the terminal equipment. Specifically, the NCR-MT communicates with the network device via the C-link, and the NCR-Fwd forwards signals via the BH link and the AC link.

In the embodiments of this disclosure, the repeater may communicate with the network device, receive communication channels/signals transmitted by the network device, and demodulate/decode the channels/signals to obtain information transmitted by the network device to the repeater. A signal processing process is hereinafter referred to as "communication". The repeater may also forward channels/signals transmitted between the network device and the terminal equipment, does not demodulate/decode the channels/signals, and may perform amplification, etc. A signal processing process is hereinafter referred to as "forwarding", and "communication" and "forwarding" are collectively referred to as "transfer". In addition, 'performing transmission or reception on the AC link (or the BH link)' may be equivalent to 'performing forwarding on the AC link (or the BH link)', and 'performing transmission or reception on the control link' may be equivalent to 'performing communication on the control link'. The above terms are for convenience of explanation only, and are not intended to limit this disclosure. In some cases, "a forwarding unit" and "a forwarding behavior" are interchangeable.

In the embodiments of this disclosure, the repeater may also be expressed as a network-controlled repeater (NCR), a radio frequency repeater, a relay, a radio frequency relay; or, it may also be expressed as a repeater node, or a relay node; or, it may also be expressed as an intelligent repeater, an intelligent relay, an intelligent repeater node, an intelligent relay node, etc.; however, this disclosure is not limited thereto.

In the embodiments of this disclosure, the network device may be a device of a serving cell of the terminal equipment, or a device in a cell where the repeater is located, or a device of a serving cell of the repeater, or a parent node of the repeater. Names of the repeater are not limited in this disclosure, and any device able to achieve the above functions is included in the scope of the repeater of this disclosure.

In the embodiments of this disclosure, higher-layer signaling may be, for example, radio resource control (RRC) signaling; for example, it includes an RRC message, which includes a master information block (MIB), system information, and a dedicated RRC message; or, it is an RRC information element (RRC IE); or an information field (or an information field included in an information field) included in an RRC message or an RRC information element. Higher-layer signaling may also be, for example, medium access control (MAC) signaling, or referred to as an MAC control element (MAC CE); however, this disclosure is not limited thereto.

In the embodiments of this disclosure, multiple means at least two, or two or more than two.

In the embodiments of this disclosure, "predefined" means defined in a protocol or determined according to a rule defined in a protocol, without needing additional configuration. Configuration/indication refer(s) to configuring/indicating directly or indirectly by a network device via higher-layer signaling and/or physical layer signaling. The physical layer signaling refers to, for example, control information (DCI) carried by a physical control channel or control information carried by a sequence. However, it is not limited thereto, and configuration/indication may be performed by introducing a higher-layer parameter into the higher-layer signaling, the higher-layer parameter referring to an information field and/or an information element (IE) in the higher-layer signaling.

Implementations of the embodiments of this disclosure shall be described below with reference to the accompanying drawings. These implementations are illustrative only, and are not intended to limit this disclosure.

Following description shall be given with reference to embodiments.

### Embodiments of a first aspect

The embodiments of this disclosure provide a forwarding control method, which shall be described from a repeater side.

FIG. 2 is a schematic diagram of the forwarding control method of the embodiments of this disclosure. As shown in FIG. 2, the method includes:
201: a mobile termination of the repeater transitions from an RRC connected state to a non-RRC connected state, wherein the non-RRC connected state includes an RRC inactive state or an RRC idle state; and
202: a forwarding unit of the repeater forwards a signal.

It should be noted that FIG. 2 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 2.

In some embodiments, both the mobile termination of the repeater (hereinafter referred to as an NCR-MT) and the forwarding unit of the repeater (NCR-Fwd) are functional entities in the repeater, and both the mobile termination of the repeater and the forwarding unit of the repeater may be referred to as repeaters.

In some embodiments, the method may further include: the mobile termination of the repeater receives a first RRC release message , the first RRC release message being used to transition the mobile termination of the repeater from the RRC connected state (RRC CONNECTED) to the non-RRC connected state. That is, before and/or when the NCR-MT receives the first RRC release message, the NCR-MT is in the RRC connected state, or, in other words, the mobile termination of the repeater receives the first RRC release message before transitioning from the RRC connected state to the non-RRC connected state. In the RRC connected state, RRC connection is established between the NCR-MT and the network device, in which RRC signaling transmission may be involved (possibly accompanied by data transmission). After receiving the first RRC release message, the NCR-MT transitions to the non-RRC connected state, including an RRC inactive state (RRC INACTIVE) and an RRC idle state (RRC IDLE). Upon receiving the first RRC release message, the NCR-MT stores various configurations transmitted by the network device and transitions to the RRC inactive state, and the RRC connection established between the NCR-MT and the network device is suspended, data are unable to be transmitted, and a core network connection is established; or, after receiving the first RRC release message, the NCR-MT transitions to the RRC idle state, the RRC connection established between the NCR-MT and the network device is released, RRC signaling cannot be transmitted, data cannot be transmitted, and there is no core network connection. Reference may be made to existing technical definitions for these states, which shall not be repeated herein any further. The above transition may also be replaced with enter or transfer or move or being transitioned or transferred or moved by the network device, etc.; however, the embodiments of this disclosure are not limited thereto.

In some embodiments, in 202, the forwarding unit of the repeater forwards signals after the mobile termination of the repeater receives the first RRC release message and/or after the mobile termination transitions to the non-RRC connected state. That is, the forwarding unit of the repeater is in an ON state after the mobile termination of the repeater receives the first RRC release message and/or after the mobile termination transitions to the non-RRC connected state. Cells of which signals are forwarded by the forwarding unit, beams which are used to forward signals and forwarding directions shall be described below.

### (I) The cells of which signals are forwarded by the repeater (hereinafter referred to as forwarded cells)

At present, for a terminal equipment, when the RRC release message used to transition the UE to the non-RRC connected state is received, if the RRC release message includes redirection carrier information, the UE shall attempt to camp on a suitable cell according to this information. If the UE is unable to discover/find a suitable cell, the UE is allowed to camp on any indicated suitable cell of the radio access technology RAT. If the RRC release message does not include redirected carrier information, the UE shall attempt to select a suitable cell on an NR carrier. If no suitable cell is found based on the above, the UE shall perform cell selection by using stored information, so as to find a suitable cell to camp on.

It was found by the inventors that the cell on which the UE initially camps after receiving the RRC release message used to transition the UE to the non-RRC connected state is a suitable cell discovered by the UE, and the network device may provide some auxiliary information, but the cell on which the UE initially camps is not completely controlled by the network device. However, unlike an ordinary UE, the NCR forwards signals after the NCR-MT transitions to the non-RRC connected state, and a cell of which signals are forwarded (forwarded cell) by the NCR shall be controlled by the network, so as to enhance network coverage while reducing interference. The forwarded cell shall be described below.

In some embodiments, the forwarded cell includes a first cell and/or a second cell, wherein carrier frequencies and/or cell identities of the first cell and the second cell are different. The first cell and/or the second cell is/are predefined and/or indicated, or the forwarded cell is dependent on implementations.

In some embodiments, the first cell and/or the second cell may be predefined as that: the first cell includes a first serving cell of the mobile termination of the repeater, and/or a second serving cell of the mobile termination of the repeater, and the first serving cell and the second serving cell are or are not the same cell. The second cell includes a third serving cell of the mobile termination of the repeater. The first serving cell refers to a cell when the mobile termination of the repeater is in the RRC connected state, and the second serving cell refers to a cell on which the mobile termination of the repeater in the non-RRC connected state camps. The third serving cell is a cell reselected by the mobile termination of the repeater and camps on. Carrier frequencies and/or cell identities of the third serving cell and the second serving cell are different.

For example, the first serving cell is a cell or primary cell (Pcell) to which the mobile termination of the repeater in the RRC connected state is connected, and/or, a last cell or primary cell (Pcell) to which the mobile termination of the repeater in the RRC connected state is connected, and/or, a cell or primary cell (Pcell) to which the mobile termination of the repeater is connected before entering into the non-RRC connected state, and/or, a last cell or primary cell (Pcell) to which the mobile termination of the repeater is connected before entering into the non-RRC connected state, and/or, a cell or primary cell (Pcell) to which the mobile termination of the repeater is connected upon receiving the first RRC release message, and/or, a cell or primary cell (Pcell) used to transmit the first RRC connection release message. When there is only one serving cell (Pcell) after initial access of the NCR and no cell switch is performed, the above cells essentially refer to identical cell, and when cell switch occurs after initial access of the NCR, the above cells may possibly be different cells. The second serving cell includes a first/initial cell on which the mobile termination of the repeater in the non-RRC connected state camps, and/or a first/initial cell on which the mobile termination of the repeater camps after receiving the first RRC release message. The third serving cell includes a (current/latest) cell reselected by the mobile termination of the repeater in the non-RRC connected state and camps on.

In some embodiments, the first cell and/or the second cell is/are indicated, wherein the first cell is indicated by the first RRC release message or by other signaling different from the first RRC release message, and the second cell is indicated by the first RRC release message or by other signaling different from the first RRC release message, wherein the other signaling is received before or after the first RRC release message (i.e. the other signaling and the first RRC release message are carried by different PDSCHs or different channels), or is received simultaneously with the first RRC release message (i.e. the other signaling and the first RRC release message are carried by the same PDSCH). The other signaling may be RRC signaling and/or MAC layer signaling. The other signaling may be received by the NCR in the RRC connected state.

In some embodiments, the first RRC release message or other signaling includes first information, the first information being used to indicate the first cell and/or the second cell (one or more cells). For example, the first information may include carrier frequency/frequencies and/or PLMN(s) and/or cell identity/identities (CellIdentity) and/or PCI of the first cell and/or second cell. Wherein, the cell identity is used to unambiguously identify a cell in PLMN/SNPN. Other information in the first RRC release message and other signaling shall be described in subsequent embodiments.

In some embodiments, the first cell and/or the second cell may be predefined and indicated. For example, in a case where the first cell and/or the second cell is/are not indicated (by, for example, the first RRC release message or the other signaling) (such as when the first RRC release message or the other signaling does not include the first information), the first cell and/or the second cell is/are predefined. (That is, one or more default cells is/are specified in a protocol, which is/are used in a case where the first RRC release message or other signaling does not indicate the first cell and/or the second cell.) In a case where the first RRC release message or other signaling indicates the first cell and/or the second cell (such as when the first RRC release message or other signaling includes the first information), the first cell and/or the second cell is/are indicated.

In some embodiments, in 202, the forwarding unit of the repeater forwards signals of the first cell and the second cell simultaneously or not simultaneously.

For example, when the first serving cell and the second serving cell are identical and the NCR does not perform cell reselection after entering into the non-RRC connected state, the repeater forwards the signals of the first serving cell (or the second serving cell) after the mobile termination of the repeater receives the first RRC release message and/or after the mobile termination transitions to the non-RRC connected state.

For example, when the first serving cell and the second serving cell are different and the NCR does not perform cell reselection after entering into the non-RRC connected state, the repeater forwards the signals of the first serving cell and the second serving cell simultaneously or not simultaneously after the mobile termination of the repeater receives the first RRC release message and/or after the mobile termination transitions to the non-RRC connected state.

For example, when the first serving cell and the second serving cell are identical and the NCR performs cell reselection after entering into the non-RRC connected state and camps on the third serving cell, the repeater first forwards the signals of the first serving cell (or the second serving cell) after the mobile termination of the repeater receives the first RRC release message and/or after the mobile termination transitions to the non-RRC connected state, and then forwards signals of the third serving cell after reselecting to camp on the third serving cell.

For example, when the first serving cell and the second serving cell are different and the NCR performs cell reselection after entering into the non-RRC connected state and camps on the third serving cell, the repeater first forwards the signals of the first serving cell and the second serving cell (simultaneously or not simultaneously) after the mobile termination of the repeater receives the first RRC release message and/or after the mobile termination transitions to the non-RRC connected state, and then forwards the signals of the third serving cell after reselecting to camp on the third serving cell.

For example, in a case where the first RRC release message or other signaling indicates multiple cells, the repeater simultaneously or not simultaneously forwards signals of the multiple indicated cells after the mobile termination of the repeater receives the first RRC release message and/or after the mobile termination transitions to the non-RRC connected state.

In some embodiments, the forwarded cell may be updated or changed, and an updated or changed forwarded cell may be predefined or indicated. For example, if it is predefined or indicated as updating/changing the forwarded cell, the NCR is allowed to forward signals of different cells (such as the second serving cell and the third serving cell) at different times after receiving the first RRC release message and/or after transitioning to the non-RRC connected state and/or when it is in the non-RRC connected state. For example, when the cell on which the NCR-MT camps changes (from the second serving cell to the third serving cell), the NCR forwards signals of the second serving cell and the third serving cell at different times after receiving the first RRC release message and/or after transitioning to the non-RRC connected state and/or when it is in the non-RRC connected state. For example, if it is predefined or indicated as not updating/not changing the forwarded cell, the NCR will not update the forwarded cell, that is, NCR will not forward signals of different cells (such as the second serving cell and the third serving cell) at different times after receiving the first RRC release message and/or after transitioning to the non-RRC connected state and/or when it is in the non-RRC connected state.

For example, when updating or changing the forwarded cell is indicated, it may be indicated by second information, which may be carried by the first RRC release message or other signaling. If the first RRC release message or other signaling includes the second information, it indicates updating/changing the forwarded cell, and if the first RRC release message or other signaling does not include the second information, it indicates not updating/changing the forwarded cell, or vice versa. Or, second information of different bit values may be used to indicate updating or changing the forwarded cell (0 indicates updating/changing, and vice versa), or not updating or changing the forwarded cell (1 indicates not updating/changing, and vice versa).

### (II) A second beam used by the repeater in forwarding signals

In some embodiments, the forwarding unit of the repeater uses a second beam in performing forwarding. The second beam refers to a beam used by an access link when the forwarding unit of the repeater performs forwarding or a beam used by a UE side of the repeater. The second beam is also hereinafter referred to as an access link beam. That is, the forwarding unit of the repeater uses the second beam to forward signals to the UE, or forwards signals from the UE side.

In some embodiments, the second beam is predefined or indicated.

In some embodiments, the second beam includes: a last (access link) beam used in performing forwarding before receiving the first RRC release message and/or before transitioning to the non-RRC connected state and/or when being in the RRC connected state, and/or a last (access link) beam used by a time resource in performing forwarding before receiving the first RRC release message and/or before transitioning to the non-RRC connected state and/or when being in the RRC connected state, and/or a beam indicated by (last) received and/or applied third indication information (before receiving the first RRC release message and/or before transitioning to the non-RRC connected state and/or when being in the RRC connected state), and/or a downlink beam corresponding to a last time resource indicated by (last) received third indication information (before receiving the first RRC release message and/or before transitioning to the non-RRC connected state and/or when being in the RRC connected state).

In some embodiments, the third indication information is used to indicate an access link beam used by the forwarding unit of the repeater in performing forwarding before the mobile termination of the repeater receives the first RRC release message and/or before transitions to the non-RRC connected state and/or when the mobile termination of the repeater is in the RRC connected state and/or after receiving the first RRC release message and/or after transitioning to the non-RRC connected state and/or when being in the non-RRC connected state.

For example, the third indication information may be access link beam indication information, and is carried by DCI (aperiodic access link beam indication) and/or RRC signaling (periodic access link beam indication) and/or MAC signaling. For example, the third indication information may be DCI in a first DCI format, the first DCI format being used for access link beam indication. The downlink control information in the first DCI format is not used for scheduling PDSCHs or PUSCHs, and may also be used for scheduling PDSCHs or PUSCHs. The first DCI format may be a newly-introduced DCI format (e.g. DCI format 2_8, or 2_9, or 2_10, etc.), or may be an existing DCI format (e.g. 1_1, or 2_0, etc.) (the existing DCI format still supports functions in the embodiments of this disclosure); however, the embodiments of this disclosure is not limited thereto.

In some embodiments, "downlink control information in the first DCI format" or "downlink control information using the first DCI format" or "DCI in the first DCI format" or "second beam indication information" or "DCI" may also be replaced with "first DCI format".

For example, the third indication information may include one or more fourth information fields indicating a beam and one or more fifth information fields indicating a time resource, and the forwarding unit of the repeater does not perform forwarding outside the indicated (by the third indication information)time resources. For example, the third indication information is DCI, and one fourth information field is used to indicate one access link beam index, or at most one access link beam index, or multiple access link beam indices. The access link beam index may include a beam index corresponding to an access link beam (or a (actual) physical beam) and/or a beam index not corresponding to a beam (or a (actual) physical beam).

In some embodiments, a beam index range is predefined and/or is configured/indicated by higher-layer signaling. For example, all beam indices within the beam index range are predefined or are configured/indicated by the higher-layer signaling, or some beam indices therein are predefined while others are configured/indicated by the higher-layer signaling. For the latter case, for example, beam indices corresponding beams are predefined, while beam indices not corresponding to beams are configured/indicated by the higher-layer signaling; however, it is not limited thereto.

In some embodiments, one fifth information field is used to indicate one time resource index, or indicate at most one time resource index, or indicate multiple time resource indices. The index may be replaced with a sequence number.

In some embodiments, the fifth information field corresponds to a time-domain resource table. The time-domain resource table is predefined and/or is configured by the above first RRC message or other RRC messages. The time-domain resource table includes one or more time resource configurations, and the time domain resource (TDRA) table (or simply referred to as a TDRA table) includes at least one row (column). For ease of description, one row (column) is hereinafter referred to as one TDRA configuration, and one TDRA configuration includes one or more time resources or does not include a time resource. A time resource is continuous or discontinuous.

In some embodiments, a time resource is, for example, defined by one or more of the following parameters: a slot offset K₃, a symbol offset S, a duration L used to determine a time resource, and a subcarrier spacing. These parameters are respectively predefined and/or are configured by higher-layer signaling. Wherein, slot offset K₃ refers to an offset between a starting slot of a time resource or a first slot corresponding to/overlapping with/associated with the starting slot of the time resource and a reference point. The reference point may be determined at least based on a slot or symbol where the DCI carrying the second beam indication information is located, or a slot or symbol where a PUCCH/PUSCH of HARQ feedback for the DCI or PDCCH carrying the second beam indication information is located. If a time resource configuration includes multiple time resources, reference points of slot offsets of different time resources are identical (for example, all of them are determined at least based on the slot or symbol where the DCI of the second beam indication information is located) or different (for example, for a first time resource, they are determined at least based on the slot or symbol where the DCI of the second beam indication information is located, and for subsequent time resources, they are determined at least based on a slot or symbol where a previous time resource is located). The symbol offset S refers to an offset between a first one of symbols of a time resource and a boundary/starting symbol/first one of symbols of the above starting slot or a starting symbol/first one of symbols of to the DCI or PDCCH/PDCCH MO carrying the second beam indication information. The duration L of the time resource, for example, denotes the number of symbols contained in the time resource. The symbol offset S and/or the duration L of the time resource must ensure that the configured time resource is within the same slot, or that the configured time resource may be within the same slot or may be across slots. Numbers of time resources included the configurations in the time-domain resource table are identical or different.

In some embodiments, time resources in a configuration may be defined in a form of a list or sequence. For example, an IE is introduced, which includes parameters of one time resource defined above. One configuration includes one list or sequence, the list or sequence including one or more fields corresponding to the above IE.

In some embodiments, the fifth information field may indicate one or more time resources or may not indicate a time resource by indicating the configurations in the time-domain resource table.

In some embodiments, the time resource index may include a time resource index corresponding to a time resource and/or a time resource index not corresponding to a time resource. For example, the time resource index is an index or sequence number configured by a column (row) in the time-domain resource table to which the fifth information field corresponds. If all configurations in the time-domain resource table include time resources, the time resource index includes only a time resource index corresponding to a time resource, and if there exist configurations that include time resources and configurations that do not include time resources in the time-domain resource table, the time resource index includes a time resource index corresponding to a time resource and a time resource index not corresponding to a time resource. For another example, all configurations in the time-domain resource table include time resources, if all values in the time resource index correspond to the configurations in the time-domain resource table, the time resource index includes only a time resource index corresponding to a time resource, and if a part of values in the time resource index correspond to the configurations in the time resource table and another part of values do not correspond to any configuration in the time-domain resource table, the time resource index includes a time resource index corresponding to a time resource and a time resource index not corresponding to a time resource. Wherein, the time resource index not corresponding to a time resource, for example, is predefined and/or is configured by higher-layer signaling.

In some embodiments, the second beam is indicated by third indication information, for example, when the third indication information is DCI, the forwarding unit of the repeater monitors a DCI format corresponding to the third indication information before the mobile termination of the repeater receives the first RRC release message and/or before transitions to the non-RRC connected state and/or when being in the RRC connected state, and still monitors the DCI format corresponding to the third indication information after receiving the first RRC release message and/or after transitioning to the non-RRC connected state and/or when being in the non-RRC connected state, and takes the access link beam indicated by the third indication information as the second beam. That is, the access link beam indicate by the aperiodic access link beam indication information (DCI) may be used for forwarding signals in the RRC connected state, and may be used for forwarding signals in the non-RRC connected state.

In some embodiments, the second beam is indicated by fourth indication information, wherein the fourth indication information is dedicated to indicating a access link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state, and/or the fourth indication information is carried by DCI and/or RRC signaling and/or an MAC CE. However, the embodiments of this disclosure are not limited thereto, for example, the fourth indication information is included in the first RRC release message.

For example, the fourth indication information includes information for indicating one or more second beams, and furthermore, the fourth indication information includes or does not include information for indicating time resources. When the fourth indication information includes information for indicating time resources, the forwarding unit of the repeater does not perform forwarding outside of the indicated (by the fourth indication information) time resources.

In some embodiments, when the fourth indication information indicates the second beam, the third indication information is used to indicate the access link beam used by the forwarding unit of the repeater in performing forwarding before the mobile termination of the repeater receives the first RRC release message and/or before transitions to the non-RRC connected state and/or when the mobile termination of the repeater is in RRC connected state. That is, the forwarding unit of the repeater monitors a DCI format to which the third indication information corresponds before the mobile termination of the repeater receives the first RRC release message and/or before transitions to the non-RRC connected state and/or the mobile termination of the repeater is in the RRC connected state, does not monitor the DCI format to which the third indication information corresponds after receiving the first RRC release message and/or after transitioning to the non-RRC connected state and/or when being in the non-RRC connected state, and takes the access link beam indicated by the fourth indication information (such as being included in the first RRC release message) as the second beam. That is, the access link beam indicated by the aperiodic access link beam indication information (DCI) may be used for forwarding signals in the RRC connected state, and is not used for forwarding signals in the non-RRC connected state.

### (III) A first beam used by the repeater in forwarding signals

In some embodiments, the forwarding unit of the repeater uses a first beam in performing forwarding. The first beam refers to a beam used by a backhaul link or a beam used by the network device side of the repeater when the forwarding unit of the repeater performs forwarding. The first beam is also hereinafter referred to as a backhaul link beam. That is, the forwarding unit of the repeater uses the first beam to forward signals to the network device, or forwards signals from the network device side.

In some embodiments, the first beam is predefined or indicated.

In some embodiments, the first beam may include: a (last) beam used in performing forwarding and/or in performing reception and/or transmission by a control link or the mobile termination of the repeater before receiving the first RRC release message and/or before transitioning to the non-RRC connected state and/or when being in the RRC connected state, and/or
a (last) beam used by a control link or the mobile termination of the repeater before receiving the first RRC release message and/or before transitioning to the non-RRC connected state and/or when being in the RRC connected state, and/or
a beam used in receiving (by a control link or the mobile termination of the repeater) the first RRC release message, and/or
a beam used by a PUSCH or a PUCCH transmitting HARQ-ACK information for a PDSCH carrying the first RRC release message, and/or
a beam used by a control link or the mobile termination of the repeater, and/or
a beam used for monitoring a control channel, and/or
a beam determined by a QCL assumption of a CORESET with a minimum ID (in a CORESET configured for the first serving cell), and/or
a beam determined by a spatial relation of a PUCCH with a minimum (PUCCH resource) ID (in a CORESET configured for the first serving cell), and/or
a beam of a (last) indicated unified TCI (in/for the first serving cell), and/or
a beam indicated by (last) received (before receiving the first RRC release message and/or before transitioning to the non-RRC connected state and/or when being in the RRC connected state) first indication information;
a beam identical to a beam used by a control link in performing reception and/or transmission at a latest/last time, and/or
a beam determined according to an SSB identified/selected in an initial access procedure, and/or
a beam determined according to an SSB identified/selected in a random access procedure, and/or
a beam determined according to an SSB identified/selected in a latest random access procedure.

For example, the above used/determined beam is a beam for the network device side, and refers to a beam used by the forwarding unit of the repeater in forwarding to the network device or a beam used by the network device side.

For example, for the beam determined by a QCL assumption of a CORESET with a minimum ID, the CORESET with a minimum ID is a CORESET with anID in a first DL BWP and/or a first time position. The CORESET may be CORESET #0, the first DL BWP is in a Pcell, and/or, the first DL BWP is an initial DL BWP or a default DL BWP or an active DL BWP, and the first time position includes: the latest/last slot in which one or more CORESETs are monitored by the NCR-MT(the latest/last slot in which (one or more) CORESETs are monitored by the NCR-MT) (such as within an active BWP of the serving cell (such as the PCell)/within the above first DL BWP).

For example, for the beam determined by a spatial relationship of a PUCCH with a minimum PUCCH resource ID, the PUCCH with the minimum PUCCH resource ID is a PUCCH with a minimum PUCCH resource ID in the first UL BWP and/or the second time position, the first UL BWP is in the Pcell, and/or, the first UL BWP is an initial UL BWP or a default UL BWP or an active UL BWP, and the second time position includes: the latest/last slot in which a PUCCH is transmitted by the NCR-MT(or the latest/last slot in which a PUCCH is transmitted by the NCR-MT) (such as within an active BWP of the serving cell).

For example, for the beam identical to a beam adopted by a control link in performing reception and/or transmission for a latest/last time or the beam determined according to an SSB identified/selected in an initial access procedure or the beam determined according to an SSB identified/selected in a random access procedure or the beam determined according to an SSB identified/selected in a latest random access procedure, for the downlink, the NCR determines according to an SSB identified/selected in an initial access procedure or a random access procedure, the QCL assumption is based on an SSB identified/selected in the initial access procedure, or, in other words, identical to beams for receiving an RAR, and/or for receiving a DCI/PDCCH used for scheduling a PUSCH (Msg.3), and/or for receiving a DCI/PDCCH used for scheduling a PDSCH (Msg.4), and/or for receiving Msg.4, in the initial access procedure. For the uplink, the UL TX spatial filter is identical to that of a PUSCH scheduled by an RAR in the initial access procedure or random access procedure, and/or a PUSCH (Msg.3) and/or a PUCCH scheduled by a DCI/PDCCH, wherein, the random access procedure is used for initial access or beam failure resume or RRC connection reestablishment or RRC connection resume. The initial access procedure, the random access procedure and the performing reception and/or transmission by the control link at a latest/last time are performed before the mobile termination of the repeater receives the first RRC release message. The performing reception by the control link at a latest/last time includes: monitoring a PDCCH and/or receiving a PDSCH and/or a CSI-RS and/or an SSB at a latest/last time, and the performing transmission by the control link at a latest/last time includes: transmitting a PUSCH and/or a PUCCH and/or an SRS at a latest/last time.

In some embodiments, after the NCR receives the first RRC release message and/or after the NCR transitions to the non-RRC connected state and/or when NCR is in the non-RRC connected state, when the mobile termination of the repeater performs reception or transmission, the first beam is a beam used by the control link or the mobile termination of the repeater, that is, when downlink reception or uplink transmission is simultaneously performed in the time resources in the control link and the backhaul link, regardless of whether there is signaling dedicated for indicating a backhaul link beam, the backhaul link beam (first beam) is identical to the beam used by the control link or the mobile termination of the repeater.

For example, for the downlink, when the NCR-MT monitors control channels (including paging channels and/or system information) (in POs), or performs necessary measurement related to cell reselection, or (if the NCR-Fwd still forwards signals during an RNA update process or RRC connection resume procedure based on an RAN notification area) receives RAR/Msg.2 or Msg.4 (such as including a connection resume message), the backhaul link beam (first beam) is identical respectively to a beam used by the NCR-MT in monitoring the control channels or performing the above measurement or receiving RAR/Msg.2 or Msg.4.

For example, (if the NCR-Fwd still forwards signals during the RNA update procedure or RRC connection resume procedure,) for the uplink, when the NCR-MT transmits signals (such as a random access channel, Msg.3 (including a connection resume request message), for a PUCCH of Msg.4 carrying HARQ-ACK), the backhaul link beam (first beam) is identical to a beam used by the NCR-MT in transmitting the above signals (i.e. an uplink beam or spatial relationship used in the random access procedure).

In some embodiments, after the NCR receives the first RRC release message and/or after the NCR transitions to the non-RRC connected state and/or when the NCR is in the non-RRC connected state, when the mobile termination of the repeater does not perform reception or transmission, that is, when downlink reception or uplink transmission in the control link and backhaul link are not performed simultaneously in the time resources, the first beam is:
a (last) beam used in performing forwarding before receiving the first RRC release message and/or before transitioning to the non-RRC connected state and/or when being in the RRC connected state, and/or,
a (last) beam used by the control link or the mobile termination of the repeater before receiving the first RRC release message and/or before transitioning to the non-RRC connected state and/or when being in the RRC connected state, and/or,
a beam used for receiving the first RRC release message (by the control link or the mobile termination of the repeater), and/or,
a beam used by a PUSCH or a PUCCH transmitting HARQ-ACK information for a PDSCH carrying the first RRC release message, and/or,
a beam determined by a QCL assumption of a CORESET with a minimum ID (in a CORESET configured for the first serving cell), and/or
a beam determined by a spatial relation of a PUCCH with a minimum (PUCCH resource) ID (in a CORESET configured for the first serving cell), and/or
a beam of an indicated unified TCI or a beam of a last indicated unified TCI (in/for the first serving cell), and/or
a beam indicated by received (before receiving the first RRC release message and/or before transitioning to the non-RRC connected state and/or when being in the RRC connected state) first indication information or last indication information;
a beam identical to a beam used by the control link in performing reception and/or transmission at a latest/last time, and/or
a beam determined according to an SSB identified/selected in an initial access procedure, and/or
a beam determined according to an SSB identified/selected in a random access procedure, and/or
a beam determined according to an SSB identified/selected in a latest random access procedure.

For example, the first beam is the (last) beam used in performing forwarding before receiving the first RRC release message and/or before transitioning to the non-RRC connected state and/or when being in the RRC connected state, and/or the (last) beam used by the control link or the mobile termination of the repeater before receiving the first RRC release message and/or before transitioning to the non-RRC connected state and/or when being in the RRC connected state, and/or the beam used (by the control link or the mobile termination of the repeater) in receiving the first RRC release message. In some cases, for example, if the NCR does not support a capability of new signaling to indicate backhaul link beams, or if a dedicated signal does not indicate backhaul link beams, when the Rel-15/16 beam indication framework is used for control link, the beam determined by the QCL assumption of the CORESET with the minimum ID (in the CORESET configured for the first serving cell) and/or the beam determined by the spatial relationship of the PUCCH with the minimum (PUCCH resource) ID (in the CORESET configured for the first serving cell) is the backhaul link beam (first beam); and when the Rel-17 beam indication framework (i.e. unified TCI framework) is used for the control link, a beam of a last indicated unified TCI (in/for the first serving cell) is the backhaul link beam (first beam). If the dedicated signaling (first indication information) indicates the backhaul link beam, the first beam is a beam indicated by last received the first indication information. For example, if the beam indication framework in Rel-15 is used for the NCR-MT, the first indication information indicates the downlink beam to select one of TCI state IDs from a control link beam list configured by RRC, and the uplink beam is indicated by an SRI on the control link via the first indication information. If the beam indication framework in Rel-17 is used for the NCR-MT, the first indication information indicates uplink and downlink beams to select one of TCI state IDs from a control link beam list configured by RRC. For example, that the first indication information indicates that the backhaul link beam is taken as the first beam is only applicable to a case where the NCR supports that new signaling is used to indicate the backhaul link beam.

In some embodiments, the first beam includes a first downlink beam for downlink forwarding and a first uplink beam for uplink forwarding. The first uplink beam is determined by the first downlink beam, wherein the first uplink beam includes:
a (last) uplink beam used in performing (uplink) forwarding and/or in performing reception and/or transmission by the control link or the mobile termination of the repeater before receiving the first RRC release message and/or before transitioning to the non-RRC connected state and/or when being in the RRC connected state, and/or,
an uplink beam of a (last) time resource in performing uplink forwarding before receiving the first RRC release message and/or before transitioning to the non-RRC connected state and/or when being in the RRC connected state, and/or,
a (last) uplink beam used by the control link or the mobile termination of the repeater before receiving the first RRC release message and/or before transitioning to the non-RRC connected state and/or when being in the RRC connected state, and/or,
an uplink beam of a (last) uplink transmission before receiving the first RRC release message and/or before transitioning to the non-RRC connected state and/or when being in the RRC connected state, and/or,
an uplink beam used by a PUSCH or a PUCCH transmitting HARQ-ACK information for a PDSCH carrying the first RRC release message, and/or,
an (uplink) beam determined by a spatial relation of a PUCCH with a minimum (PUCCH resource) ID (in a CORESET configured for the first serving cell), and/or
an uplink beam of an indicated unified TCI or a last indicated unified TCI (in/for the first serving cell), and/or
an uplink beam indicated by the received (before receiving the first RRC release message and/or before transitioning to the non-RRC connected state and/or when being in the RRC connected state) first indication information or last first indication information;
an uplink beam identical to a beam used by the control link in performing reception and/or transmission at a latest/last time, and/or
an uplink beam determined according to an SSB identified/selected in an initial access procedure, and/or
an uplink beam determined according to an SSB identified/selected in a random access procedure, and/or
an uplink beam determined according to an SSB identified/selected in a latest random access procedure.

The first downlink beam includes:
a (last) downlink beam used in performing (downlink) forwarding and/or in performing reception and/or transmission by the control link or the mobile termination of the repeater before receiving the first RRC release message and/or before transitioning to the non-RRC connected state and/or when being in the RRC connected state, and/or,
a downlink beam of a (last) time resource in performing downlink forwarding before receiving the first RRC release message and/or before transitioning to the non-RRC connected state and/or when being in the RRC connected state, and/or,
a (last) downlink beam used by the control link or the mobile termination of the repeater before receiving the first RRC release message and/or before transitioning to the non-RRC connected state and/or when being in the RRC connected state, and/or,
a downlink beam of a (last) downlink transmission (from the first serving cell) before receiving the first RRC release message and/or before transitioning to the non-RRC connected state and/or when being in the RRC connected state, and/or,
a (downlink) beam used for receiving the first RRC release message, and/or,
a (downlink) beam used by the control link or the mobile termination of the repeater, and/or,
a (downlink) beam used for monitoring a control channel, and/or,
a (downlink) beam determined by a QCL assumption of a CORESET with a minimum ID (in a CORESET configured for the first serving cell), and/or
a downlink beam of a indicated unified TCI or a last indicated unified TCI (in/for the first serving cell), and/or
a downlink beam indicated by the received (before receiving the first RRC release message and/or before transitioning to the non-RRC connected state and/or when being in the RRC connected state) first indication information or last first indication information;
a downlink beam identical to a beam used by the control link in performing reception and/or transmission at a latest/last time, and/or
a downlink beam determined according to an SSB identified/selected in an initial access procedure, and/or
a downlink beam determined according to an SSB identified/selected in a random access procedure, and/or
a downlink beam determined according to an SSB identified/selected in a latest random access procedure.

In some embodiments, the first indication information is used to indicate a backhaul link beam used by the forwarding unit of the repeater in performing forwarding before the mobile termination of the repeater receives the first RRC release message and/or before the mobile termination of the repeater transitions to the non-RRC connected state and/or when the mobile termination of the repeater being in the RRC connected state and/or after the mobile termination of the repeater receives the first RRC release message and/or after the mobile termination of the repeater transitions to the non-RRC connected state and/or when the mobile termination of the repeater being in the non-RRC connected state. The first indication information may also be carried by the first RRC signaling; however, the embodiments of this disclosure are not limited thereto, for example, the first indication information includes information for indicating beams.

In some embodiments, the first beam is indicated by first indication information, for example, the forwarding unit of the repeater receives the first indication information before the mobile termination of the repeater receives the first RRC release message and/or before the mobile termination of the repeater transitions to the non-RRC connected state and/or when the mobile termination of the repeater is in the RRC connected state, still receives the first indication information after mobile termination of the repeater receives the first RRC release message and/or after the mobile termination of the repeater transitions to the non-RRC connected state and/or when the mobile termination of the repeater is in the non-RRC connected state, and takes the backhaul link beam indicated by the first indication information as the first beam. That is, the backhaul link beam indicated by the first indication information may be used for forwarding signals in the RRC connected state, and may be used for forwarding signals in the non-RRC connected state.

For example, the first indication information is MAC signaling. Wherein, the first indication information is used to indicate a TCI state for a backhaul link from the first TCI state set, or indicate a TCI state for a backhaul link from the second TCI state set, or indicate an SRI for a backhaul link from a first SRI set. For example, when the control link applies the Rel-15/16 beam indication framework, for a downlink beam, the first indication information indicates the TCI state for a backhaul link from the first TCI state set, and for an uplink beam, the first indication information indicates the SRI for a backhaul link from the first SRI set; and when the control link applies the Rel-17 beam indication framework, the first indication information indicates the TCI state for a backhaul link from the second TCI state set.

In some embodiments, the first indication information includes one or more MAC CEs.

For example, the first indication information includes a first MAC CE used to indicate a downlink beam of a backhaul link. When the control link applies the Rel-15/16 beam indication framework, for the downlink beam, the first MAC CE indicates the TCI state for the backhaul link from the first TCI state set, at least includes a first information field for indicating a TCI state (e.g. a TCI state ID), and includes or does not include a second information field for indicating a serving cell (e.g. a serving cell ID) and/or a third information field for indicating a downlink BWP (e.g. a BWP ID).

For example, the first indication information includes a second MAC CE used to indicate an uplink beam of a backhaul link. When the control link applies the Rel-15/16 beam indication framework, for the uplink beam, the second MAC CE indicates the SRI for the backhaul link from the first SRI set, at least includes a first information field for indicating an SRI (e.g. an SRI ID), and includes or does not include a second information field for indicating a serving cell (e.g. a serving cell ID) and/or a third information field for indicating a UL BWP (e.g. a BWP ID). For example, the first information field indicates the SRI for the backhaul link by indicating pucch-SpatialRelationInfold.

For example, the first indication information includes a third MAC CE used to indicate an uplink beam and/or a downlink beam of a backhaul link. When the control link applies an Rel-17 beam indication framework, the third MAC CE indicates the TCI state for the backhaul link from the second TCI state set, at least includes a first information field for indicating a TCI state (e.g. a TCI state ID), and includes or does not include a second information field for indicating a serving cell (e.g. a serving cell ID) and/or a third information field for indicating a BWP (e.g. a BWP ID). What is indicated by the first information field is a unified TCI state, such as indicating a TCI state for a backhaul link from dl-OrJointTCI-StateList.

The above first MAC CE, second MAC CE and third MAC CE may be identical MAC CEs or different MAC CEs, and the embodiments of this disclosure are not limited thereto.

In some embodiments, the first beam is indicated by second indication information, which is dedicated to indicating a backhaul link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state. For example, the second indication information is carried by an MAC CE or second RRC signaling, and is different from the first indication information and is an MAC CE dedicated to indicating the backhaul link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state; or, the second RRC signaling is dedicated RRC signaling, and is different from the first RRC signaling and is dedicated to indicating the backhaul link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state. For example, the second indication information is included in the first RRC release message.

In some embodiments, the second indication information indicates the backhaul link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state, and the first indication information is used to indicate the backhaul link beam used by the forwarding unit of the repeater in performing forwarding before the mobile termination of the repeater receives the first RRC release message and/or before the mobile termination of the repeater transitions to the non-RRC connected state and/or when the mobile termination of the repeater is in the RRC connected state. That is, the forwarding unit of the repeater determines the backhaul link beam according to the first indication information before the mobile termination of the repeater receives the first RRC release message and/or before the mobile termination of the repeater transitions to the non-RRC connected state and/or when the mobile termination of the repeater is in the RRC connected state, and takes the backhaul link beam indicated by the second indication information (e.g. included in the first RRC release message) as the first beam after receiving the first RRC release message and/or after transitioning to the non-RRC connected state and/or when being in the non-RRC connected state.

### (IV) Forwarding direction of the repeater in forwarding signals

In some embodiments, the forwarding unit of the repeater forwards signals according to TDD configurations, which include a first TDD configuration (e.g. TDD-UL-DL-ConfigCommon) received by the mobile termination of the repeater in system information broadcast by the first cell and/or the second cell and/or the first serving cell and/or the second serving cell and/or the third serving cell, and/or a second TDD configuration (TDD-UL-DL-ConfigDedicated) received by the mobile termination of the repeater (before receiving the first RRC release message) (in the first cell and/or the first serving cell). For example, the first and/or second TDD configuration(s) may flexibly configure transmission direction types for time resources, wherein the transmission direction types include uplink, downlink, and flexible, and wherein the second TDD configuration is unable to rewrite downlink or uplink configured by the first TDD configuration. That is, if the first TDD configuration configures a slot or symbol as downlink (or uplink), the second TDD configuration is unable to reconfigure the slot or symbol as uplink or flexible (or downlink or flexible), even if it is configured as uplink or flexible (or downlink or flexible) in the second TDD configuration, the configuration in the first TDD configuration (still downlink (or uplink)) shall prevail. The second TDD configuration may rewrite the flexible configured by the first TDD configuration into downlink or uplink. That is, if the first TDD configuration configures a slot or symbol as flexible, or does not configure it as uplink or downlink, the second TDD configuration may configure it as downlink or uplink, and of course, it may also configure it as flexible.

For example, for the case where the NCR-Fwd performs forwarding after the NCR-MT enters into the RRC inactive state, an applied semi-persistent configuration is a last/latest received semi-persistent configuration (such as the first TDD configuration and/or the second TDD configuration) before receiving the first RRC release message, and the first RRC release message is used to transition the mobile termination of the repeater from the RRC connected state (RRC CONNECTED) to the RRC inactive state.

It can be seen from above that the repeater may forward signals only after determining the forwarded cell, the first beam/second beam and the forwarding direction. The forwarded cell, the first beam and the second beam may be predefined, and when at least one of the forwarded cell (first information), the first beam (first or second indication information) and the second beam (third or fourth indication information) is indicated, the network device may provide necessary configurations to the repeater, including one or more of the first information, the first or second indication information, the third or fourth indication information and the TDD configurations. The above necessary configurations are included in the first RRC release message, or are included in the other signaling described above; however, the embodiments of this disclosure are not limited thereto.

In some embodiments, that the repeater forwards or does not forward signals after receiving the first RRC release message and/or after transitioning to the non-RRC connected state and/or when being in the non-RRC connected state is predefined.

For example, after receiving the first RRC release message and/or after transitioning to the non-RRC connected state and/or when being in the non-RRC connected state, the network device must provide the necessary configurations to the repeater (the repeater expects the network device to provide the necessary configurations), and the forwarding unit of the repeater forwards signals according to the necessary configurations (and predefined information) in the first RRC release message and/or in other signaling.

For example, before receiving the first RRC release message and/or before transitioning to the non-RRC connected state and/or when being in the RRC connected state, if the network device does not provide necessary configurations to the repeater, the forwarding unit of the repeater does not forward signals. If the network device does not provide necessary configurations to the repeater, the forwarding unit of the repeater forwards signals according to necessary configurations (and predefined information) in the first RRC release message and/or in other signaling.

In some embodiments, that the repeater forwards or does not forward signals after receiving the first RRC release message and/or after transitioning to the non-RRC connected state and/or when being in the non-RRC connected state is indicated (by third information). The third information may be carried by the first RRC release information or other signaling; however, the embodiments of this disclosure are not limited thereto. For example, when the first RRC release information or other signaling includes the third information, it indicates that the repeater forwards signals after receiving the first RRC release information and/or after transitioning to the non-RRC connected state and/or when being in the non-RRC connected state, and when the first RRC release message or other signaling does not include the third information, it indicates that the repeater does not forward signals after receiving the first RRC release message and/or after transitioning to the non-RRC connected state and/or when being in the non-RRC connected state, or vice versa. The third information may indicate forwarding signals (0 indicates forwarding) or not forward signals (1 indicates not forwarding) via different bit values after receiving the first RRC release message and/or after transitioning to the non-RRC connected state and/or when being in the non-RRC connected state; however, the embodiments of this disclosure are not limited thereto.

In some embodiments, the above first information, second information and third information correspond respectively to information fields newly introduced into the first RRC release message or other signaling or existing information fields (in order to support the NCR, the information fields support the above new functions or meanings); however, the embodiments of this disclosure are not limited thereto. As described above, the first RRC release message or other signaling may include one or more of the first information, second information, third information, first/second indication information and third/fourth indication information.

It can be seen from the above embodiments that the repeater may forward signals after it enters the non-RRC connected state, so that the time resources/beams to which the ON state of the forwarding unit corresponds may be enabled to match with the time resources/beams of data transmission between the network device and the terminal equipment, thereby saving power consumption of the repeater, reducing interference, and improving network throughput.

Currently, the UE in the non-RRC connected state performs cell reselection. A principle of the process is as follows:
cell reselection is always based on CD SSBs located in a synchronization grid;
the UE measures attributes of the serving cell and neighbor cells to implement the reselection process; and
for search and measurement of neighbor inter-frequency cells, carrier frequencies need only to be indicated.

Cell reselection identifies a cell on which the UE shall camp. It is based on criteria for cell reselection, including measurement of the serving cell and neighbor cells:
intra-frequency reselection is based on ranking of cells;
inter-frequency reselection is based on an absolute priority, and the UE attempts to camp on a frequency of an available highest priority (i.e. a cell at the frequency);
the serving cell may provide a neighbor cell list (NCL) to handle specific situations of intra-frequency and inter-frequency neighbor cells;
(the serving cell) may provide an exclusion list to prevent the terminal from reselecting to specific intra-frequency and inter-frequency neighbor cells;
(the serving cell) may provide a permission list to require the terminal to only reselect specific intra-frequency and inter-frequency neighbor cells;
the cell reselection may be dependent on speeds;
a service-specific priority;
(the serving cell) may provide slice-based cell reselection information to facilitate the UE to reselect a cell that supports specific slices.

In the non-RRC connected state, the above serving cell refers to a camped cell. According to the criteria for cell reselection, if the UE finds a more suitable cell, the UE reselects and camps on the cell. If the new cell does not belong to at least one TA in which the UE registers, location registration is performed. In the RRC inactive state, if the new cell does not belong to a configured RNA, an RNA update process is executed.

At present, under normal camping conditions, the UE shall:
1. monitor paging channels of the cell according to broadcast information in SIB1;
2. monitor short messages transmitted via DCI with a P-RNTI;
3. monitor relevant system information;
4. perform necessary measurement for the cell reselection evaluation;
5. execute the cell reselection evaluation process at the following occasions/triggering
   a. intra-UE triggering, so as to satisfy performances;
   b. when information used for the cell reselection evaluation process on the BCCH is modified
   c. when network slices and/or NSAG information received from an NAS changes.

It was found by the inventors that the UE in the non-RRC connected state performs necessary measurement for cell reselection evaluation. Based on the cell reselection process, more suitable cells may be discovered, and the camped cell may change. On the other hand, the UE monitors paging channels, and system information, etc. in the camped cell. For the NCR, if the cell connected to the NCR-MT in the RRC inactive state refers to its camped cell, it means that when the camped cell changes, the cell of which signals are forwarded by the NCR will also change. However, the network side may possibly be unable to learns that the cell on which the NCR-MT camps has changed, which will lead to that a cell of which signals are forwarded is out of control of the network, thereby resulting in strong interference. On the other hand, there is currently no method for whether/how the NCR proceeds with forwarding signals if the NCR-MT is paged or initiates connection resume.

The embodiments of this disclosure further provide a forwarding control method, which shall be described from a repeater side.

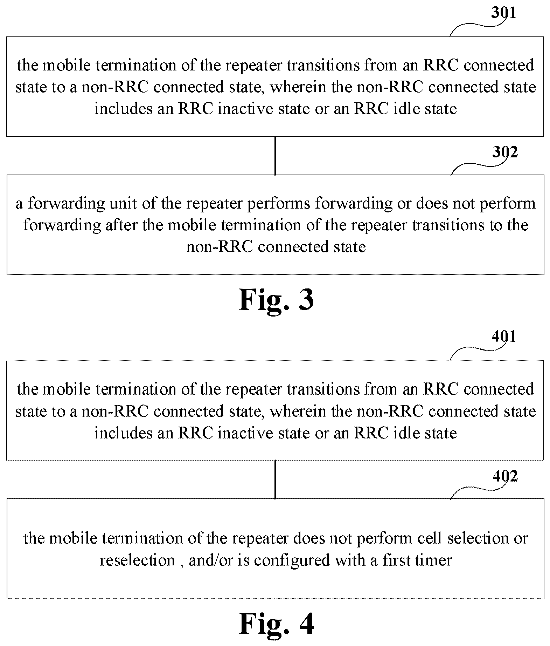

FIG. 3 is a schematic diagram of the forwarding control method of the embodiments of this disclosure. As shown in FIG. 3, the method includes:
301: a mobile termination of the repeater transitions from an RRC connected state to a non-RRC connected state, the non-RRC connected state including an RRC inactive state or an RRC idle state; and
302: a forwarding unit of the repeater performs forwarding or does not perform forwarding after the mobile termination of the repeater transitions to the non-RRC connected state.

It should be noted that FIG. 3 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 3.

In some embodiments, the method may further include: the mobile termination of the repeater receives a first RRC release message , first RRC release message being used to transition the mobile termination of the repeater from the RRC connected state to the non-RRC connected state. That is, the NCR-MT is in the RRC connected state before and/or when the NCR-MT receives the first RRC release message, or the mobile termination of the repeater receives the first RRC release message before transitioning from the RRC connected state to the non-RRC connected state.

In some embodiments, the NCR does not forward signals at all in the non-RRC connected state, that is, when a second condition is satisfied, the forwarding unit of the repeater does not perform forwarding after the mobile termination of the repeater transitions to the non-RRC connected state. The second condition includes: (until receiving the first RRC release message or transitioning to the non-RRC connected state, or before receiving the first release message or before transitioning to the non-RRC connected state,) the mobile termination of the repeater receives information (carried by the first RRC release message or an RRC reconfiguration message or other messages) indicating that the forwarding unit of the repeater does not perform forwarding after the mobile termination of the repeater transitions to the non-RRC connected state, or (until receiving the first RRC release message or transitioning to the non-RRC connected state, or before receiving the first release message or before transitioning to the non-RRC connected state,) the repeater is not provided and/or activated with an access link beam configuration and/or is released and/or deactivated an access link beam configuration. For example, the access link beam configuration includes a periodic access link beam configuration and/or (active) semi-persistent access link configuration, the access link configurations being carried by the above third indication information, such as RRC signaling, which shall not be repeated herein any further.

In some embodiments, after the mobile termination of the repeater transitions to the non-RRC connected state and performs forwarding and when/after a first condition is satisfied, the forwarding unit of the repeater does not forward the signal; and/or, the mobile termination of the repeater transmits a connection resume request message or a connection establishment request message.

The first condition includes:
the mobile termination of the repeater finds a more suitable cell after entering into the non-RRC connected state to perform cell selection or reselection; and/or,
a cell where the mobile termination of the repeater camps changes (for example, the camped cell is changed from the second serving cell to the third serving cell) after the mobile termination of the repeater enters into the non-RRC connected state; and/or,
the mobile termination of the repeater finds a more suitable cell after entering into the non-RRC connected state to perform cell selection or reselection, and the more suitable cell does not belong to a configured cell able to be forwarded( that is the cell that NCR is allowed to perform forwarding, e.g. indicated by first information); and/or,
the first timer expires; and/or,
the mobile termination of the repeater receives paging message for the mobile termination; and/or,
the mobile termination of the repeater detects (based on or not based on the measurement for the cell reselection evaluation) a (intra-frequency) cell of quality better than that of a currently forwarded cell; and/or,
a serving cell of the repeater does not satisfy a third condition.

In some embodiments, the first condition further includes: the repeater does not update the forwarded cell (predefined or indicated by second information).

The first timer is started upon receiving the first RRC release message, and/or is stopped upon receiving an RRC resume message or RRC establishment message or upon receiving the first RRC release message again (after transmitting the connection resume request or connection establishment request), wherein relevant information of the first timer is carried by the first RRC release message, and the first RRC release message may also carry the above third information. The first timer is, for example, T380 (a timer of a periodic RNAU process triggered in an NCR-MT) or a newly-introduced timer. The timer is in units of milliseconds, seconds, hours, and days; however, this disclosure is not limited thereto.

The above relevant information used to indicate the first timer is optional, or is mandatory present (for the NCR-MT) (i.e. the first RRC release message must include the relevant information of the first timer).

The above paging is initiated by RAN, or in other words, the paging is RAN paging, or the paging message is based on an I-RNTI.

The third condition above is an S standard, i.e. Srxlev>S_{IntraSearchP} and Squal>S_{IntraSearchQ}; where, Srxlev denotes a cell selection reception level value, Squal denotes cell selection quality, S_{IntraSearchP} denotes an intra-frequency cell search reception level reference value, and S_{IntraSearchQ} denotes an intra-frequency cell search quality reference value.

In some embodiments, when the non-RRC connected state is an RRC inactive state, the mobile termination of the repeater transmits a connection resume request message (*RRCResumeRequest* or *RRCResumeRequest1*), and when the non-RRC connected state is an RRC idle state, the mobile termination of the repeater transmits a connection establishment request message, wherein the connection resume request message includes resume cause information, or the connection establishment request message includes establishment cause information. The resume cause information or the establishment cause information includes a cause defined for the repeater, or includes other existing causes (such as RNA update), wherein the other existing causes may support or may not support new functions or meanings, such as new meanings defined for the repeater.

In some embodiments, that the forwarding unit of the repeater does not forward signals may also be referred to as stopping forwarding signals, or that the forwarding unit of the repeater is in an OFF/standby state, which indicates that the NCR-Fwd is not allowed or has no capability or is not intended to forward signals.

With the above method, the situation where the signals of the forwarded cell get out of control of the network may be avoided, thereby avoiding strong interference.

The embodiments of this disclosure further provide a forwarding control method, which shall be described from a repeater side.

FIG. 4 is a schematic diagram of the forwarding control method of the embodiments of this disclosure. As shown in FIG. 4, the method includes:
401: the mobile termination of the repeater transitions from an RRC connected state to a non-RRC connected state, wherein the non-RRC connected state includes an RRC inactive state or an RRC idle state; and
402: the mobile termination of the repeater does not perform cell selection or reselection , and/or is configured with a first timer.

In some embodiments, the mobile termination of the repeater enters into the non-RRC connected state, and the mobile termination of the repeater does not perform cell selection or reselection (such as performing or not performing necessary measurement or other measurement for cell reselection evaluation), which means that a cell on which the NCR camps will not change, and signals of the forwarded cell will not go out of control of the network, thereby avoiding strong interference.

In some embodiments, the mobile termination of the repeater enters into the non-RRC connected state, and the first RRC release message includes relevant information of the first timer, that is, the NCR must be configured with the first timer and implement according to the method in FIG. 3. Thus, the situation where the signals of the forwarded cell get out of control of the network may be avoided, thereby avoiding strong interference.

The implementations in FIGs. 3 and 4 may be implemented independently or in a combined manner.

The embodiments of this disclosure further provide a forwarding control method, which shall be described from a repeater side.

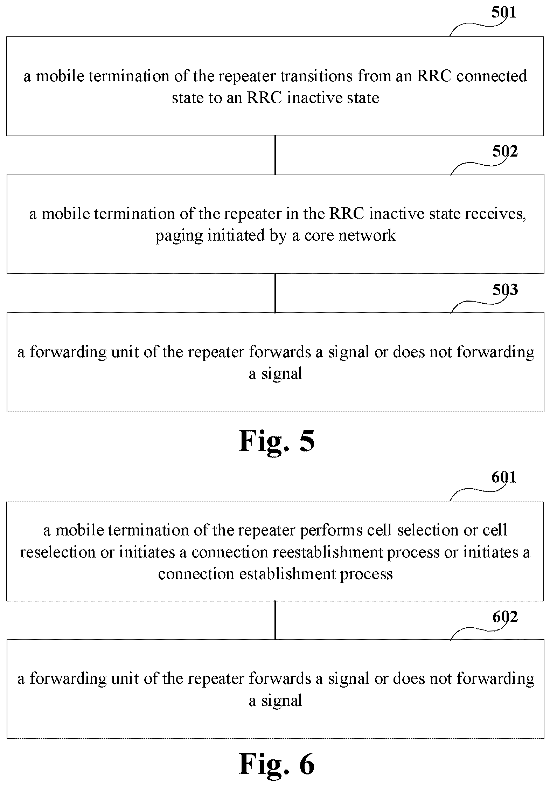

FIG. 5 is a schematic diagram of the forwarding control method of the embodiments of this disclosure. As shown in FIG. 5, the method includes:
501: a mobile termination of the repeater transitions from an RRC connected state to an RRC inactive state;
502: a mobile termination of the repeater in the RRC inactive state receives, paging initiated by a core network; and
503: a forwarding unit of the repeater forwards a signal or does not forwarding a signal .

Unlike the paging cell initiated by RAN described above, when the mobile termination of the repeater in the RRC inactive state receives paging initiated by a CN (CN paging), the forwarding unit of the repeater forwards a signal or does not forward a signal, for example, it proceeds with forwarding signals in the method in the embodiments in FIG. 2, or it may be OFF or not forward or stop forwarding signals; however, the embodiments of this disclosure are not limited thereto. Contents repeated with the previous embodiments shall not be described herein any further.

The embodiments of this disclosure further provide a forwarding control method, which shall be described from a repeater side.

FIG. 6 is a schematic diagram of the forwarding control method of the embodiments of this disclosure. As shown in FIG. 6, the method includes:
601: a mobile termination of the repeater performs cell selection or cell reselection or initiates a connection reestablishment process or initiates a connection establishment process; and
602: a forwarding unit of the repeater forwards a signal or does not forwarding a signal.

A cause for the mobile termination to perform cell selection or cell reselection or initiate a connection reestablishment process or initiate a connection establishment process in 601 is not limited to satisfying the first condition described above. In 602, the forwarding unit of the repeater forwards or does not forward signals, for example, it proceeds with forwarding signals (of a first cell) in the method in the embodiments in FIG. 2, or it may be OFF or not forward or stop forwarding signals; however, the embodiments of this disclosure are not limited thereto. Contents repeated with the previous embodiments shall not be described herein any further.

In some embodiments, what is different from the embodiments in FIG. 4 is that when the mobile termination of the repeater enters into the non-RRC connected state, the mobile termination of the repeater may perform cell selection or reselection, ignores cell barred or reserved indication information in cell system information and/or unified access control configuration information. Or, in other words, the cell barred or reserved information in the cell system information and/or the unified access control configuration information is/are not applicable to the NCR. The cell barred or reserved information includes cellBarred, cellReservedForOperatorUse, cellReservedForOtherUse, cellReservedForFutureUse, intraFreqReselection indications. cellBarred indicates whether the cell is in a barred state, cellReservedForOperatorUse indicates whether the cell is reserved for operator use, cellReservedForOtherUse indicates whether the cell is reserved for other uses; The cellReservedForFutureUse indicates whether the cell is reserved for future use, and intraFreqReselection indications indicate inter-frequency reselection indication information.

In some embodiments, only when the cell system information indicates that a selected PLMN or SNPN supports the repeater, the mobile termination of the repeater takes a cell broadcasting the cell system information as a candidate cell for the cell selection or reselection process.

In some embodiments, the mobile termination of the repeater in the RRC connected state does not support cell-level mobility and/or only supports intra-cell beam-level mobility (does not support cell-level mobility). The NCR-MT (in RRC_CONNECTED) performs RLM radio link monitoring in an active BWP according to a reference signal (SSB/CSI-RS) and signal quality threshold configured by the network. SSB-based RLM is based on an SSB associated with an initial DL BWP, which may be an initial DL BWP, and may be a DL BWP configuration of a SSB associated with the initial DL BWP. For other DL BWPs, RLM may only be performed based on a CSI-RS. In case of DAPS switch, the NCR-MT proceeds with detecting radio link failures in a source cell, until a random access procedure of a target cell is successfully completed.

In some embodiments, the NCR-MT declares a radio link failure (RLF) when one of the following criteria is satisfied that:
a second timer started after a physical layer prompts a radio problem (a radio problem timer) expires (if the radio problem is resumed before the timer expires, the UE will stop the timer); or
a third timer started when a measurement indicator configured with a third timer triggers a measurement report expires while another radio problem timer (such as the above second timer) is running; or
a random access procedure fails; or
RLC fails; or
persistent uplink LBT problems/failures in operations of shared spectrum channel access are detected.

In some embodiments, after declaring the RLF (of a serving cell/PCell), the NCR-MT selects a suitable cell and then initiates RRC reestablishment, and enters into the RRC idle state if no suitable cell is found in a period of time after the RLF is declared. NCR-Fwd is OFF or does not forward or stops forwarding or proceeds with forwarding. For example, when the NCR-MT performs cell selection, the NCR-Fwd is OFF or does not forward or stops forwarding or proceeds with forwarding, and is OFF or does not forward or stops forwarding when the NCR-MT performs connection reestablishment.

In some embodiments, for the RRC connection reestablishment process, when the NCR-MT with activated AS security in RRC_CONNECTED and established SRB2, the process may be initiated to proceed with the RRC connection. If AS security is not activated, the NCR-MT does not initiate the process and directly enters into RRC_IDLE, with a cause for release being 'other'. If AS security has been activated but SRB2 has not been established, the NCR-MT does not initiate the process and directly enters into RRC_IDLE, with a cause for release being 'RRC connection failure'.

In some embodiments, the mobile termination of the repeater transmits an RRC reestablishment connection request and receives an RRC setup complete message, the RRC setup complete message (RRCSetupComplete) including repeater node indication information (ncr-NodeIndication). That is, if the NCR initiates RRC connection reestablishment, the RRC setup complete message (RRCSetupComplete) includes the repeater node indication information (ncr-NodeIndication).

In some embodiments, the NCR-MT reports its radio access capability, which is static at least when it is requested by the network. According to band information, the network device may request capabilities which are reported by the NCR-MT. The capabilities of the NCR-MT may be represented by a capability ID, which may be exchanged in NAS signaling and network signaling rather than in a UE capability structure. The NCR-MT may also report the capabilities of the NCR-MT by using UECapabilityEnquiry and UECapabilityInformation messages.

In some embodiments, that the NCR-MT supports UE capability retrieval framework and related signaling is optional or mandatory, or conditionally optional and/or conditionally mandatory. In a case where the NCR-MT does not support the UE capability retrieval framework, it is assumed that the capabilities of the NCR-MT are known to the network by other means (such as OAM).

In some embodiments, whether the NCR-MT supports the RRC inactive state is optional or mandatory, or conditionally optional and/or conditionally mandatory.

In some embodiments, whether the NCR (or NCR-Fwd) supports forwarding signals when the NCR-MT is in the RRC inactive state may also be optional or mandatory, or conditionally optional and/or conditionally mandatory.

In some embodiments, the mobile termination of the repeater transmits first capability information and/or second capability information to the network device, the first capability information being used to indicate whether the mobile termination of the repeater supports an RRC inactive state, and the second capability information being used to indicate whether the forwarding unit of the repeater supports forwarding a signal when the mobile termination of the repeater is in the non-RRC connected state.

In some embodiments, the first capability information and the second capability information are identical or different. The 'identical or different' includes that information names defined in corresponding protocols are identical or different. There may exist some correlations between the above two capabilities, which shall be described below by taking the RRC inactive state as an example.

For example, if the NCR-MT supports the RRC inactive state, the NCR (or NCR-Fwd) mandatorily supports forwarding signals when the NCR-MT is in the RRC inactive state. For example, the NCR-MT transmits the first capability information indicating that the NCR-MT supports RRC_INACTIVE, and must or does not need to transmit the second capability information indicating that the NCR (or NCR-Fwd) supports forwarding signals when the NCR-MT is in the RRC inactive state. For the case where there is no need to transmit the above second capability information, it may also be said that the first capability information is further used to indicate that the NCR (or NCR-Fwd) supports forwarding signals when the NCR-MT is in the RRC inactive state.

For example, the NCR-MT supports the RRC inactive state only when the NCR (or NCR-Fwd) supports forwarding signals in the RRC inactive state. For example, the NCR-MT transmits the second capability information indicating that the NCR (or NCR-Fwd) supports forwarding signals when the NCR-MT is in the RRC inactive state, and must or does not need to transmit the first capability information indicating that the NCR-MT supports the RRC inactive state. For the case where there is no need to transmit the above first capability information, it may also be said that the second capability information is further used to indicate that the NCR-MT supports the RRC inactive state.

In some embodiments, for the NCR-MT, SRB2 configuration with no DRB/MRB is supported.

Implementation of the above forwarding control method is as described above, and shall not be enumerated herein any further. The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

### Embodiments of a second aspect

The embodiments of this disclosure provide a repeater. The repeater may be, for example, the NCR as described above, or a network device or terminal equipment having a function of forwarding, or one or some components or assemblies configured in the NCR or the network device or the terminal equipment.

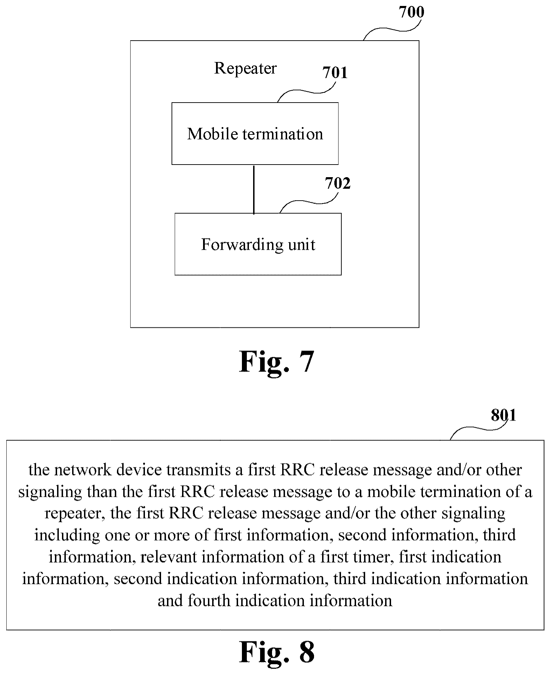

FIG. 7 is a schematic diagram of the repeater of the embodiments of this disclosure. As a principle of the repeater for solving problems is identical to that of the method in the embodiments of the first aspect, reference may be made to the implementation of the method described in the embodiments of the first aspect for implementation of the repeater, with identical or related contents being not going to be described herein any further.

As shown in FIG. 7, the repeater 700 in the embodiments of this disclosure includes: a mobile termination 701 and a forwarding unit 702, the mobile termination 701 and the forwarding unit 702 being functional entities, and their functions being implemented by different hardware modules.

The mobile termination 701 transitions from an RRC connected state to a non-RRC connected state, wherein the non-RRC connected state includes an RRC inactive state or an RRC idle state;
and the forwarding unit 702 forwards a signal;
   or,
the mobile termination 701 transitions from an RRC connected state to a non-RRC connected state, wherein the non-RRC connected state includes an RRC inactive state or an RRC idle state;
and the forwarding unit 702 performs forwarding or does not perform forwarding after the mobile termination of the repeater transitions to the non-RRC connected state;
   or,
the mobile termination 701 performs cell selection or cell reselection or initiates a connection reestablishment process or initiates a connection establishment process;
and the forwarding unit 702 forwards signals or does not forward signals;
   or,
the mobile termination 701 in a non-RRC connected state receives a paging message initiated by a core network;
and the forwarding unit 702 forwards signals or does not forward signals;
   or,
the mobile termination 701 transitions from an RRC connected state to a non-RRC connected state, wherein the non-RRC connected state includes an RRC inactive state or an RRC idle state; the mobile termination does not perform cell selection or reselection, and/or the mobile termination of the repeater is configured with a first timer.

Reference may be made to the embodiments of the first aspect for implementations of the mobile termination 701 and the forwarding unit 702, which shall not be repeated herein any further.

Furthermore, for the sake of simplicity, connection relationships between the components or modules or signal profiles thereof are only illustrated in FIG. 7. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

### Embodiments of a third aspect

The embodiments of this disclosure provide an information transmission method, which shall be described from a network device side, with parts identical to those in the embodiments of the first aspect being not going to be described herein any further.

FIG. 8 is a schematic diagram of the information transmission method of the embodiments of this disclosure. As shown in FIG. 8, the method includes:
801: the network device transmits a first RRC release message and/or other signaling than the first RRC release message to a mobile termination of a repeater, the first RRC release message and/or the other signaling including one or more of first information, second information, third information, relevant information of a first timer, first indication information, second indication information, third indication information and fourth indication information. Reference may be made to the embodiments of the first aspect for these information, which shall not be repeated herein any further.

It should be noted that FIG. 8 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 8.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

### Embodiments of a fourth aspect

The embodiments of this disclosure provide a network device.

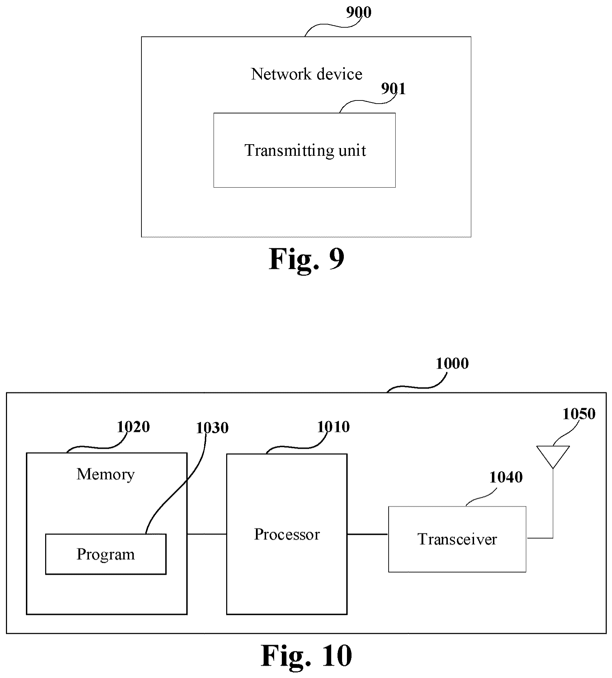

FIG. 9 is a schematic diagram of the network device of the embodiments of this disclosure. As a principle of the network device for solving problems is similar to that of the method in the embodiments of the third aspect, reference may be made to the embodiments of the third aspect for implementation of the network device, with identical or related contents being not going to be described herein any further.

As shown in FIG. 9, the network device 900 of the embodiments of this disclosure includes:
a transmitting unit 901 configured to transmit a first RRC release message and/or other signaling than the first RRC release message to a mobile termination of a repeater, the first RRC release message and/or the other signaling including one or more of first information, second information, third information, relevant information of a first timer, first indication information, second indication information, third indication information and fourth indication information.

Reference may be made to the embodiments of the third aspect for implementation of the transmitting unit 901, which shall not be repeated herein any further.

It should be noted that the components or modules related to this disclosure are only described above. However, this disclosure is not limited thereto, and the network device 900 of the embodiments of this disclosure may further include other components or modules, and reference may be made to related techniques for particulars of these components or modules.

Furthermore, for the sake of simplicity, connection relationships between the components or modules or signal profiles thereof are only illustrated in FIG. 7. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

### Embodiments of a fifth aspect

The embodiments of this disclosure provide a communication system. FIG. 1 is a schematic diagram of the communication system of the embodiments of this disclosure. As shown in FIG. 1, the communication system 100 includes a network device 101, a repeater 102 and terminal equipments 103. For the sake of simplicity, description is given in FIG. 1 by taking one network device, one repeater and one terminal equipment only as an example; however, the embodiments of this disclosure are not limited thereto.

In the embodiments of this disclosure, existing traffics or traffics that may be implemented in the future may be performed between the network device 101 and the terminal equipment 103. For example, such traffics may include but not limited to enhanced mobile broadband (eMBB), massive machine type communication (mMTC), ultra-reliable and low-latency communication (URLLC), and vehicle to everything (V2X) communication, etc. The repeater 102 is configured to execute the forwarding control method in the embodiments of the first aspect, and the network device 101 is configured to execute the information transmission method in the embodiments of the third aspect, contents of which being incorporated herein, which shall not be repeated herein any further.

The embodiments of this disclosure further provide an electronic device, which may be, for example, a repeater or a network device.

FIG. 10 is a schematic diagram of a structure of the electronic device of the embodiments of this disclosure. As shown in FIG. 10, the electronic device 1000 may include a processor 1010 (such as a central processing unit (CPU)) and a memory 1020, the memory 1020 being coupled to the processor 1010. Wherein, the memory 1020 may store various data, and furthermore, it may store a program 1030 for information processing, and execute the program 1030 under control of the processor 1010.

For example, the processor 1010 may be configured to execute a program to execute the forwarding control method described in the embodiments of the first aspect.

For another example, the processor 1010 may be configured to execute a program to execute the information transmission method described in the embodiments of the third aspect.

Furthermore, as shown in FIG. 10, the electronic device 1000 may include a transceiver 1040, and an antenna 1050, etc. Wherein, functions of the above components are similar to those in the prior art, and shall not be described herein any further. It should be noted that the electronic device 1000 does not necessarily include all the parts shown in FIG. 10, and furthermore, the electronic device 1000 may include parts not shown in FIG. 10, and the prior art may be referred to.

Embodiments of this disclosure provide a computer program, which, when executed in a repeater, will cause a computer to carry out the forwarding control method described in the embodiments of the first aspect in the repeater.

Embodiments of this disclosure provide a computer medium, including a computer program, which will cause a computer to carry out the forwarding control method as described in the embodiments of the first aspect in a repeater.

Embodiments of this disclosure provide a computer program, which, when executed in a network device, will cause a computer to carry out the information transmission method described in the embodiments of the third aspect in the network device.

Embodiments of this disclosure provide a computer medium, including a computer program, which will cause a computer to carry out the information transmission method as described in the embodiments of the third aspect in a network device.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile termination, and may also be stored in a memory card of a pluggable mobile termination. For example, if equipment (such as a mobile termination) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

The embodiments of this disclosure include the following supplements.
1. A forwarding control method, applicable to a repeater, characterized in that the method comprises:
   transitioning, by a mobile termination of the repeater from an RRC connected state to a non-RRC connected state, wherein the non-RRC connected state comprises an RRC inactive state or an RRC idle state; and
   forwarding a signal by a forwarding unit of the repeater.
2. The method according to supplement 1, wherein the method further comprises:
   receiving a first RRC release message by the mobile termination of the repeater, the first RRC release message being used to transition the mobile termination of the repeater from the RRC connected state to the non-RRC connected state.
3. The method according to supplement 2, wherein the mobile termination of the repeater receives the first RRC release message before transitioning from the RRC connection state to the non-RRC connection state.
4. The method according to supplement 2, wherein the forwarding unit of the repeater forwards the signal after the mobile termination of the repeater receives the first RRC release message and/or after the mobile termination is transitioned to the non-RRC connected state.
5. The method according to any one of supplements 1-4, wherein the cell in which the signal is forwarded by the repeater comprises a first cell.
5a. The method according to any one of supplements 1-4, wherein the cell in which the signal is forwarded by the repeater is dependent on implementation.
6. The method according to supplement 5, wherein the first cell is predefined or indicated.
7. The method according to supplement 5 or 6, wherein the first cell comprises:
   a first serving cell of the mobile termination of the repeater; and/or,
   a second serving cell of the mobile termination of the repeater.
8. The method according to supplement 7, wherein the first serving cell and the second serving cell are or are not the same cell.
9. The method according to supplement 7 or 8, wherein the first serving cell refers to a cell to which the mobile termination of the repeater is connected in the RRC connected state, and the second serving cell refers to a cell where the mobile termination of the repeater camps in the non-RRC connected state.
10. The method according to any one of supplements 7-9, wherein the first serving cell is:
   a cell or a primary cell (Pcell) to which the mobile termination of the repeater is connected in the RRC connected state, and/or a last cell or primary cell (Pcell) to which the mobile termination of the repeater is connected in the RRC connected state, and/or a cell or primary cell (Pcell) to which the mobile termination of the repeater is connected before entering into the non-RRC connected state, and/or, a last cell or primary cell (Pcell) to which the mobile termination of the repeater is connected before entering into the non-RRC connected state, and/or a cell or primary cell (Pcell) to which the mobile termination of the repeater is connected upon receiving the first RRC release message, and/or a cell and/or primary cell (Pcell) used for transmitting the first RRC connection release message.
11. The method according to any one of supplements 7-10, wherein the second serving cell is:
   a cell where the mobile termination of the repeater camps first/initially in the non-RRC connected state, and/or a cell where the mobile termination of the repeater camps first/initially after receiving the first RRC release message.
12. The method according to supplement 5 or 6, wherein the first cell is indicated by the first RRC release message or other signaling different from the first RRC release message.
13. The method according to supplement 12, wherein the other signaling is received before or after the first RRC release message, or is received simultaneously with the first RRC release message.
14. The method according to any one of supplements 6-13, wherein the first cell is predefined when it is not indicated.
15. The method according to any one of supplements 1-14, wherein the cell in which the forwarding unit of the repeater forwards the signal comprises a second cell.
16. The method according to supplement 15, wherein carrier frequencies and/or cell identities of the first cell and second cell are different.
17. The method according to supplement 15 or 16, wherein the forwarding unit of the repeater simultaneously or not simultaneously forwards signals of the first cell and the second cell.
18. The method according to any one of supplements 15-17, wherein the second cell is predefined or indicated.
19. The method according to any one of supplements 15-18, wherein the second cell comprises:
   a third serving cell of the mobile termination of the repeater, the third serving cell being a cell reselected and camped on by the mobile termination of the repeater.
20. The method according to supplement 19, wherein carrier frequencies and/or cell identities of the third serving cell and second serving cell are different.
21. The method according to supplement 20, wherein the second cell is indicated by the first RRC release message or other signaling different from the first RRC release message.
22. The method according to any one of supplements 1-21, wherein the forwarding unit of the repeater uses a first beam in performing forwarding.
23. The method according to supplement 22, wherein the first beam is predefined or indicated.
24. The method according to supplement 22 or 23, wherein the first beam refers to a beam used by a backhaul link when the forwarding unit of the repeater performs forwarding or a beam used by a network device side of the repeater.
25. The method according to any one of supplements 22-24, wherein the first beam comprises:
   a (last) beam used in performing forwarding and/or in performing reception and/or transmission by a control link or the mobile termination of the repeater before receiving the first RRC release message and/or before transitioning to the non-RRC connected state and/or when being in the RRC connected state, and/or
   a (last) beam used by a control link or the mobile termination of the repeater before receiving the first RRC release message and/or before transitioning to the non-RRC connected state and/or when being in the RRC connected state, and/or
   a beam used (by a control link or the mobile termination of the repeater) in receiving the first RRC release message, and/or
   a beam used by a PUSCH or a PUCCH transmitting HARQ-ACK information for a PDSCH carrying the first RRC release message, and/or
   a beam used by a control link or the mobile termination of the repeater, and/or
   a beam used for monitoring a control channel, and/or
   a beam determined by a QCL assumption of a CORESET with a minimum ID (in a CORESET configured for the first serving cell), and/or
   a beam determined by a spatial relation of a PUCCH with a minimum (PUCCH resource) ID (in a CORESET configured for the first serving cell), and/or
   a beam of a (last) indicated unified TCI (in/for the first serving cell), and/or
   a beam indicated by (last) received (before receiving the first RRC release message and/or before transitioning to the non-RRC connected state and/or when being in the RRC connected state) first indication information;
   a beam identical to a beam used by a control link in performing reception and/or transmission at a latest/last time, and/or
   a beam determined according to an SSB identified/selected in an initial access procedure, and/or
   a beam determined according to an SSB identified/selected in a random access procedure, and/or
   a beam determined according to an SSB identified/selected in a latest random access procedure.
25a. The method according to supplement 25, wherein the initial access procedure, the random access procedure and the performing reception and/or transmission by the control link at a latest /last time are performed before the mobile termination of the repeater receives the first RRC release message.
25b. The method according to supplement 25 or 25a, wherein the performing reception by the control link at a latest/last time comprises: monitoring a PDCCH and/or receiving a PDSCH and/or a CSI-RS and/or an SSB at a latest/last time, and the performing transmission by the control link at a latest/last time comprises: transmitting a PUSCH and/or a PUCCH and/or an SRS at a latest/last time.
25c. The method according to supplement 25, wherein the CORESET with a minimum ID is a CORESET with an ID in a first DL BWP and/or a first time position.
25d. The method according to supplement 25, wherein the PUCCH with a minimum PUCCH resource ID is a PUCCH with a minimum PUCCH resource ID in a first UL BWP and/or a second time position.
25e. The method according to supplement 25c, wherein the first DL BWP is in a Pcell, and/or, the first DL BWP is an initial DL BWP or a default DL BWP or a (last) active DL BWP.
25f. The method according to supplement 25c, wherein the first time position comprises: a latest/last slot in which the mobile termination of the repeater monitors one or more CORESETs.
25g. The method according to supplement 25d, wherein the first UL BWP is in a Pcell, and/or, the first UL BWP is an initial UL BWP or a default UL BWP or a (last) active UL BWP.
25h. The method according to supplement 25d, wherein the second time position comprises a latest/last slot in which the mobile termination of the repeater transmits a PUCCH.
26. The method according to supplement 25, wherein the control channel comprises system information and/or a paging channel.
27. The method according to supplement 25 or 26, wherein when the mobile termination of the repeater receives or transmits, the first beam is the beam used by the control link or the mobile termination of the repeater, and when the mobile termination of the repeater does not receive or transmit, the first beam is:
   a last beam used in performing forwarding before receiving the first RRC release message and/or before transitioning to the non-RRC connected state and/or when being in the RRC connected state, and/or,
   a last beam used by the control link or the mobile termination of the repeater before receiving the first RRC release message and/or before transitioning to the non-RRC connected state and/or in the RRC connected state, and/or,
   a beam used for receiving the first RRC release message (by the control link or the mobile termination of the repeater), and/or,
   a beam used by a PUSCH or a PUCCH transmitting HARQ-ACK information for a PDSCH carrying the first RRC release message, and/or,
   a beam determined by a QCL assumption of a CORESET with a minimum ID (in a CORESET configured for the first serving cell), and/or
   a beam determined by a spatial relation of a PUCCH with a minimum (PUCCH resource) ID (in a CORESET configured for the first serving cell), and/or
   a beam of a (last) indicated unified TCI (in/for the first serving cell), and/or
   a beam indicated by (last) received (before receiving the first RRC release message and/or before transitioning to the non-RRC connected state and/or when being in the RRC connected state) first indication information;
   a beam identical to a beam used by the control link in performing reception and/or transmission at a latest/last time, and/or
   a beam determined according to an SSB identified/selected in an initial access procedure, and/or
   a beam determined according to an SSB identified/selected in a random access procedure, and/or
   a beam determined according to an SSB identified/selected in a latest random access procedure.
28. The method according to supplement 25 or 26, wherein the first beam comprises a first downlink beam for performing downlink forwarding and a first uplink beam for performing uplink forwarding.
29. The method according to supplement 28, wherein the first uplink beam is determined by the first downlink beam.
30. The method according to supplement 28, wherein the first uplink beam comprises:
   a last uplink beam used in performing (uplink) forwarding and/or in performing reception and/or transmission by the control link or the mobile termination of the repeater before receiving the first RRC release message and/or before transitioning to the non-RRC connected state and/or when being in the RRC connected state, and/or,
   an uplink beam of a last time resource in uplink forwarding before receiving the first RRC release message and/or before transitioning to the non-RRC connected state and/or when being in the RRC connected state, and/or,
   a last uplink beam used by the control link or the mobile termination of the repeater before receiving the first RRC release message and/or before transitioning to the non-RRC connected state and/or when being in the RRC connected state, and/or,
   an uplink beam of a last uplink transmission before receiving the first RRC release message and/or before transitioning to the non-RRC connected state and/or when being in the RRC connected state, and/or,
   an uplink beam used by a PUSCH or a PUCCH transmitting HARQ-ACK information for a PDSCH carrying the first RRC release message, and/or,
   an (uplink) beam determined by a spatial relation of a PUCCH with a minimum (PUCCH resource) ID (in a CORESET configured for the first serving cell), and/or
   an uplink beam of a (last) indicated unified TCI (in/for the first serving cell), and/or
   an uplink beam indicated by (last) received (before receiving the first RRC release message and/or before transitioning to the non-RRC connected state and/or when being in the RRC connected state) first indication information;
   an uplink beam identical to a beam used by the control link in performing reception and/or transmission at a latest/last time, and/or
   an uplink beam determined according to an SSB identified/selected in an initial access procedure, and/or
   an uplink beam determined according to an SSB identified/selected in a random access procedure, and/or
   an uplink beam determined according to an SSB identified/selected in a latest random access procedure.
31. The method according to any one of supplements 28-30, wherein the first downlink beam comprises:
   a last downlink beam used in performing (downlink) forwarding and/or in performing reception and/or transmission by the control link or the mobile termination of the repeater before receiving the first RRC release message and/or before transitioning to the non-RRC connected state and/or when being in the RRC connected state, and/or,
   a downlink beam of a last time resource in downlink forwarding before receiving the first RRC release message and/or before transitioning to the non-RRC connected state and/or when being in the RRC connected state, and/or,
   a last downlink beam used by the control link or the mobile termination of the repeater before receiving the first RRC release message and/or before transitioning to the non-RRC connected state and/or when being in the RRC connected state, and/or,
   a downlink beam of a last downlink transmission (from the first serving cell) before receiving the first RRC release message and/or before transitioning to the non-RRC connected state and/or when being in the RRC connected state, and/or,
   a (downlink) beam used for receiving the first RRC release message, and/or,
   a (downlink) beam used by the control link or the mobile termination of the repeater, and/or,
   a (downlink) beam used for monitoring a control channel, and/or,
   a (downlink) beam determined by a QCL assumption of a CORESET with a minimum ID (in a CORESET configured for the first serving cell), and/or
   a downlink beam of a (last) indicated unified TCI (in/for the first serving cell), and/or
   a downlink beam indicated by (last) received (before receiving the first RRC release message and/or before transitioning to the non-RRC connected state and/or when being in the RRC connected state) first indication information;
   a downlink beam identical to a beam used by the control link in performing reception and/or transmission at a latest/last time, and/or
   a downlink beam determined according to an SSB identified/selected in an initial access procedure, and/or
   a downlink beam determined according to an SSB identified/selected in a random access procedure, and/or
   a downlink beam determined according to an SSB identified/selected in a latest random access procedure.
32. The method according to any one of supplements 27-31, wherein the first indication information is used to indicate a backhaul link beam used by the forwarding unit of the repeater in performing forwarding before the mobile termination of the repeater receives the first RRC release message and/or before the mobile termination of the repeater transitions to the RRC connected state and/or when the mobile termination of the repeater is in the RRC connected state and/or after the mobile termination of the repeater receives the first RRC release message and/or after the mobile termination of the repeater transitions to the non-RRC connected state and/or the mobile termination of the repeater is in the non-RRC connected state .
33. The method according to any one of supplements 22-24, wherein the first beam is indicated by second indication information, the second indication information being dedicated used to indicate a backhaul link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state, and/or, the second indication information being included in the first RRC release message.
34. The method according to any one of supplements 1-33, wherein the forwarding unit of the repeater performs forwarding by using a second beam.
35. The method according to supplement 34, wherein the second beam is predefined or indicated.
36. The method according to supplement 34 or 35, wherein the second beam refers to a beam used by an access link or a beam used by a UE side of the repeater when the forwarding unit of the repeater performs forwarding.
37. The method according to any one of supplements 34-36, wherein the second beam comprises:
   a last (access link) beam used in performing forwarding before receiving the first RRC release message and/or before transitioning to the non-RRC connected state and/or when being in the RRC connected state, and/or,
   an (access link) beam used by a last time resource in performing forwarding before receiving the first RRC release message and/or before transitioning to the non-RRC connected state and/or when being in the RRC connected state, and/or,
   a beam indicated by (last) received and/or applied third indication information (before receiving the first RRC release message and/or before transitioning to the non-RRC connected state and/or when being in the RRC connected state), and/or,
   a downlink beam corresponding to a last time resource indicated by (last) received third indication information (before receiving the first RRC release message and/or before transitioning to the non-RRC connected state and/or when being in the RRC connected state).
38. The method according to supplement 37, wherein the third indication information is used to indicate an access link beam used by the forwarding unit of the repeater in performing forwarding before the mobile termination of the repeater receives the first RRC release message and/or before the mobile termination of the repeater transitions to the non-RRC connected state and/or when the mobile termination of the repeater is in the RRC connected state and/or after the mobile termination of the repeater receives the first RRC release message and/or before the mobile termination of the repeater transitions to the non-RRC connected state and/or when the mobile termination of the repeater is in the non-RRC connected state.
39. The method according to supplement 37 or 38, wherein the third indication information comprises information for indicating a time resource and information for indicating a beam, and the forwarding unit of the repeater does not perform forwarding in time resources other than the indicated (by the third indication information) time resource.
40. The method according to any one of supplements 34-36, wherein the second beam is indicated by fourth indication information, the fourth indication information being dedicated used to indicate an access link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state, and/or, the fourth indication information being included in the first RRC release message.
41. The method according to supplement 37 or 38, wherein the fourth indication information comprises or does not comprise information for indicating time resources.
42. The method according to any one of supplements 1-41, wherein the forwarding unit of the repeater forwards the signal according to TDD configuration.
43. The method according to supplement 42, wherein the TDD configuration comprises:
   first TDD configuration received by the mobile termination of the repeater in system information broadcast by a first cell and/or a second cell and/or a first serving cell and/or a second serving cell and/or a third serving cell, and/or,
   second TDD configuration received (in the first cell and/or the first serving cell) by the mobile termination of the repeater (before receiving the first RRC release message).
44. A repeater, comprising a memory and a processor, the memory storing a computer program, and the processor being configured to execute the computer program to carry out the forwarding control method as described in any one of supplements 1-43.
45. An information transmission method, applicable to a network device, characterized in that the method comprises:
   transmitting a first RRC release message and/or other signaling than the first RRC release message by the network device to a mobile termination of a repeater, the first RRC release message and/or the other signaling comprising one or more of first information, second information, third information, relevant information of a first timer, first indication information, second indication information, third indication information and fourth indication information;
   wherein the first information is used to indicate a forwarded cell,
   the second information is used to indicate whether to update or change a forwarded cell,
   the third information is used to indicate whether the forwarding unit forwards or does not forward a signal after receiving the first RRC release message and/or after transitioning to a non-RRC connected state and/or when being in the non-RRC connected state;
   the first timer is started upon receiving the first RRC release message, and/or is stopped upon receiving an RRC resume message or an RRC establishment message, or upon receiving the first RRC release message again;
   the first indication information is used to indicate a backhaul link beam used by the forwarding unit of the repeater in performing forwarding before a mobile termination of the repeater receives the first RRC release message and/or before a mobile termination of the repeater transitions to the non-RRC connected state and/or when a mobile termination of the repeater is in the RRC connected state and/or after a mobile termination of the repeater receives the first RRC release message and/or after a mobile termination of the repeater transitions to a non-RRC connected state and/or when a mobile termination of the repeater is in non-RRC connected state and/or,
   the second indication information is dedicated used to indicate a backhaul link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state,
   the third indication information is used to indicate an access link beam used by the forwarding unit of the repeater before the mobile termination of the repeater receives the first RRC release message and/or before the mobile termination of the repeater transitions to the non-RRC connected state and/or when the mobile termination of the repeater is in the RRC connected state and/or after the mobile termination of the repeater receives the first RRC release message and/or after the mobile termination of the repeater transitions to the non-RRC connected state and/or when the mobile termination of the repeater is in the non-RRC connected state,
   and the fourth indication information is dedicated used to indicate an access link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state.
46. A network device, comprising a memory and a processor, the memory storing a computer program, and the processor being configured to execute the computer program to carry out information transmission method as described in supplement 46.

The embodiments of this application further comprise the following supplements:
1. A forwarding control method, applicable to a repeater, characterized in that the method comprises:
   transitioning, by a mobile termination of the repeater from an RRC connected state to a non-RRC connected state, the non-RRC connected state comprising an RRC inactive state or an RRC idle state; and
   performing forwarding or not performing forwarding by a forwarding unit of the repeater after the mobile termination of the repeater transitions to the non-RRC connected state.
2. The method according to supplement 1, wherein the mobile termination of the repeater receives a first RRC release message, first RRC release message being used to transition the mobile termination of the repeater from the RRC connected state to the non-RRC connected state.
3. The method according to supplement 1 or 2, wherein after the mobile termination of the repeater transitions to the non-RRC connected state, the forwarding unit of the repeater performs forwarding and when/after a first condition is satisfied, the forwarding unit of the repeater does not forward the signal; and/or, the mobile termination of the repeater transmits a connection resume request message or a connection establishment request message.
4. The method according to supplement 2, the method further comprises:
   when the mobile termination of the repeater enters into the non-RRC connected state, not performing cell selection or reselection by the mobile termination of the repeater does, and/or configuring the mobile termination of the repeater with a first timer.
5. The method according to supplement 3, wherein the first condition comprises:
   the mobile termination of the repeater finds a more suitable cell after entering into the non-RRC connected state to perform cell selection or reselection; and/or,
   a cell where the mobile termination of the repeater camps changes after the mobile termination of the repeater enters into the non-RRC connected state; and/or,
   the mobile termination of the repeater finds a more suitable cell after entering into the non-RRC connected state to perform cell selection or reselection, and the more suitable cell does not belong to a configured cell able to be forwarded; and/or,
   the first timer expires; and/or,
   the mobile termination of the repeater receives paging for the mobile termination; and/or,
   the mobile termination of the repeater detects a cell of quality better than that of a currently forwarded cell; and/or,
   a serving cell of the repeater does not satisfy a third condition.
6. The method according to supplement 5, the first condition further comprises: the repeater does not update the forwarded cell.
7. The method according to any one of supplements 4-6, wherein the first timer is started upon receiving the first RRC release message, and/or is stopped upon receiving an RRC resume message or RRC establishment message or upon receiving the first RRC release message again.
8. The method according to any one of supplements 4-7, wherein relevant information of the first timer is carried by the first RRC release message.
9. The method according to supplement 5, wherein the paging is initiated by an RAN.
10. The method according to supplement 3, wherein the connection resume request message comprises resume cause information, or the connection establishment request message comprises establishment cause information.
11. The method according to supplement 10, wherein the resume cause information or the establishment cause information comprises a cause defined for the repeater.
12. The method according to supplement 1, wherein when a second condition is satisfied, the forwarding unit of the repeater does not forward after the mobile termination of the repeater transitions to the non-RRC connected state.
13. The method according to supplement 12, wherein the second condition comprises:
   the mobile termination of the repeater receives information indicating that the forwarding unit of the repeater does not forward after the mobile termination of the repeater transitions to the non-RRC connected state, (until the first RRC release message is received or it transitions to the non-RRC connected state, or before the first release message is received or it transitions to the non-RRC connected state) or,
   access link beam configuration is not provided and/or activated and/or access link beam configuration is released and/or deactivated for the repeater (until the first RRC release message is received or it transitions to the non-RRC connected state, or before the first RRC release message is received or it transitions to the non-RRC connected state).
14. The method according to supplement 13, wherein the access link beam configuration comprises periodic access link beam configuration and/or (active) semi-persistent access link configuration.
15. The method according to supplement 1, the method further comprises:
   when the mobile termination of the repeater enters into the non-RRC connected state, performing cell selection or reselection by the mobile termination of the repeater.
16. The method according to supplement 15, wherein,
   the mobile termination of the repeater ignores cell barred or reservation indication information in cell system information, and/or unified access control configuration information.
17. The method according to supplement 16, wherein,
   the mobile termination of the repeater takes a cell broadcasting the cell system information as a candidate cell in a cell selection or reselection process only when the cell system information indicates that a selected PLMN or SNPN supports the repeater.
18. The method according to supplement 1, wherein,
   the mobile termination of the repeater in the RRC connected state does not support cell-level mobility, and/or only supports beam-level mobility within a cell.
19. The method according to supplement 1, wherein,
   the mobile termination of the repeater transmits an RRC reestablishment connection request and receives an RRC establishment completion message, the RRC establishment completion message comprising repeater node indication information.
20. The method according to supplement 1, wherein,
   the mobile termination of the repeater transmits first capability information and/or second capability information to a network device,
   the first capability information being used to indicate whether the mobile termination of the repeater supports an RRC inactive state,
   and the second capability information being used to indicate whether the forwarding unit of the repeater supports forwarding a signal when the mobile termination of the repeater is in the non-RRC connected state.
21. A forwarding control method, applicable to a repeater, characterized in that the method comprises:
   performing cell selection or cell reselection or initiating a connection reestablishment process or initiating a connection establishment process by a mobile termination of the repeater;
   forwarding a signal or not forwarding a signal by a forwarding unit of the repeater.
22. A forwarding control method, applicable to a repeater, characterized in that the method comprises:
   receiving, by a mobile termination of the repeater in an RRC inactive state, paging initiated by a core network; and
   forwarding a signal or not forwarding a signal by a forwarding unit of the repeater.
23. The method according to supplement 22, wherein the mobile termination of the repeater enters into an RRC idle state and notifies an NAS.
24. A repeater, comprising a memory and a processor, the memory storing a computer program, and the processor being configured to execute the computer program to carry out the forwarding control method as described in any one of supplements 1-23.

## Claims

1. A repeater, **characterized in that** the repeater comprises:
a mobile termination configured to transition from an RRC connected state to a non-RRC connected state, wherein the non-RRC connected state comprises an RRC inactive state or an RRC idle state; and
a forwarding unit configured to forward a signal.

2. The repeater according to claim 1, wherein the mobile termination of the repeater further receives a first RRC release message, the first RRC release message being used to transition the mobile termination of the repeater from the RRC connected state to the non-RRC connected state.

3. The repeater according to claim 1, wherein a cell in which the signal is forwarded by the repeater comprises a first cell and/or a second cell.

4. The repeater according to claim 3, wherein the first cell and/or second cell is/are predefined or indicated.

5. The repeater according to claim 3, wherein the first cell comprises:
a first serving cell of the mobile termination of the repeater; and/or,
a second serving cell of the mobile termination of the repeater.

6. The repeater according to claim 5, wherein the first serving cell refers to a cell to which the mobile termination of the repeater is connected in the RRC connected state, and the second serving cell refers to a cell where the mobile termination of the repeater camps in the non-RRC connected state; and/or,
the first serving cell is: a cell or a primary cell (Pcell) to which the mobile termination of the repeater is connected in the RRC connected state, and/or a last cell or primary cell (Pcell) to which the mobile termination of the repeater is connected in the RRC connected state, and/or a cell or primary cell (Pcell) to which the mobile termination of the repeater is connected before entering into the non-RRC connected state, and/or, a last cell or primary cell (Pcell) to which the mobile termination of the repeater is connected before entering into the non-RRC connected state, and/or a cell or primary cell (Pcell) to which the mobile termination of the repeater is connected upon receiving a first RRC release message, and/or a cell and/or primary cell (Pcell) used for transmitting the first RRC connection release message.

7. The repeater according to claim 5, wherein the second serving cell is:
a cell where the mobile termination of the repeater camps first/initially in the non-RRC connected state, and/or a cell where the mobile termination of the repeater camps first/initially after receiving the first RRC release message.

8. The repeater according to claim 1, wherein the forwarding unit of the repeater uses a first beam and/or a second beam in performing forwarding.

9. The repeater according to claim 8, wherein the first beam and/or the second beam is/are predefined or indicated.

10. The repeater according to claim 8, wherein the first beam refers to a beam used by a backhaul link or a beam used by a network device side of the repeater when the forwarding unit of the repeater performs forwarding; and/or the second beam refers to a beam used by an access link or a beam used by a UE side of the repeater when the forwarding unit of the repeater performs forwarding.

11. The repeater according to claim 8, wherein the first beam comprises:
a beam used in performing forwarding and/or in performing reception and/or transmission by a control link or the mobile termination of the repeater before receiving the first RRC release message and/or before transitioning to the non-RRC connected state and/or when being in the RRC connected state, and/or
a beam used by a control link or the mobile termination of the repeater before receiving the first RRC release message and/or before transitioning to the non-RRC connected state and/or when being in the RRC connected state, and/or
a beam used in receiving the first RRC release message, and/or
a beam used by a PUSCH or a PUCCH transmitting HARQ-ACK information for a PDSCH carrying the first RRC release message, and/or
a beam used by a control link or the mobile termination of the repeater, and/or
a beam used for monitoring a control channel, and/or
a beam determined by a QCL assumption of a CORESET with a minimum ID, and/or
a beam determined by a spatial relation of a PUCCH with a minimum ID, and/or
a beam of an indicated unified TCI, and/or
a beam indicated by received first indication information;
a beam identical to a beam used by a control link in performing reception and/or transmission at a latest/last time, and/or
a beam determined according to an SSB identified/selected in an initial access procedure, and/or
a beam determined according to an SSB identified/selected in a random access procedure, and/or
a beam determined according to an SSB identified/selected in a latest random access procedure.

12. The repeater according to claim 11, wherein the initial access procedure, the random access procedure and the performing reception and/or transmission by the control link at a latest/last time are performed before the mobile termination of the repeater receives the first RRC release message; and/or, the performing reception by the control link at a latest/last time comprises: monitoring a PDCCH and/or receiving a PDSCH and/or a CSI-RS and/or an SSB at a latest/last time; and the performing transmission by the control link at a latest/last time comprises: transmitting a PUSCH and/or a PUCCH and/or an SRS at a latest/last time.

13. The repeater according to claim 11, wherein the CORESET with a minimum ID is a CORESET with an ID in a first DL BWP and/or a first time position; and/or, the PUCCH with a minimum PUCCH resource ID is a PUCCH with a minimum PUCCH resource ID in a first UL BWP and/or a second time position.

14. The repeater according to claim 13, wherein the first DL BWP is in a Pcell, and/or, the first DL BWP is an initial DL BWP or a default DL BWP or an active DL BWP; and/or, the first time position comprises: a latest/last slot in which the mobile termination of the repeater monitors one or more CORESETs.

15. The repeater according to claim 13, wherein the first UL BWP is in a Pcell, and/or, the first UL BWP is an initial UL BWP or a default UL BWP or an active UL BWP; and/or, the second time position comprises a latest/last slot in which the mobile termination of the repeater transmits a PUCCH.

16. The repeater according to claim 8, wherein the second beam comprises:
a last beam used in performing forwarding before receiving the first RRC release message and/or before transitioning to the non-RRC connected state and/or when being in the RRC connected state, and/or,
a beam used by a last time resource in performing forwarding before receiving the first RRC release message and/or before transitioning to the non-RRC connected state and/or when being in the RRC connected state, and/or,
a beam indicated by received and/or applied third indication information, and/or,
a downlink beam corresponding to a last time resource indicated by received third indication information.

17. The repeater according to claim 1, wherein the forwarding unit of the repeater forwards the signal according to TDD configuration.

18. The repeater according to claim 17, wherein the TDD configuration comprises:
first TDD configuration received by the mobile termination of the repeater in system information broadcast by a first cell and/or a second cell and/or a first serving cell and/or a second serving cell and/or a third serving cell, and/or,
second TDD configuration received by the mobile termination of the repeater.

19. A network device, **characterized in that** the network device comprises:
a transmitting unit configured to transmit a first RRC release message and/or other signaling than the first RRC release message to a mobile termination of a repeater, the first RRC release message and/or the other signaling comprising one or more of first information, second information, third information, relevant information of a first timer, first indication information, second indication information, third indication information and fourth indication information;
wherein the first information is used to indicate a forwarded cell,
the second information is used to indicate whether to update or change a forwarded cell,
the third information is used to indicate whether the forwarding unit forwards or does not forward a signal after receiving the first RRC release message and/or after transitioning to a non-RRC connected state and/or when being in the non-RRC connected state;
the first timer is started upon receiving the first RRC release message, and/or is stopped upon receiving an RRC resume message or an RRC establishment message, or upon receiving the first RRC release message again;
the first indication information is used to indicate a backhaul link beam used by the forwarding unit of the repeater in performing forwarding before a mobile termination of the repeater receives the first RRC release message and/or before a mobile termination of the repeater transitions to the non-RRC connected state and/or when a mobile termination of the repeater is in the RRC connected state and/or after a mobile termination of the repeater receives the first RRC release message and/or after a mobile termination of the repeater transitions to a non-RRC connected state and/or when a mobile termination of the repeater is in the non-RRC connected state and/or,
the second indication information is dedicated used to indicate a backhaul link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state,
the third indication information is used to indicate an access link beam used by the forwarding unit of the repeater before the mobile termination of the repeater receives the first RRC release message and/or before the mobile termination of the repeater transitions to the non-RRC connected state and/or when the mobile termination of the repeater is in the RRC connected state and/or after the mobile termination of the repeater receives the first RRC release message and/or after the mobile termination of the repeater transitions to the non-RRC connected state and/or when the mobile termination of the repeater is in the non-RRC connected state,
and the fourth indication information is dedicated used to indicate an access link beam used by the forwarding unit of the repeater in performing forwarding after the mobile termination of the repeater receives the first RRC release message and/or after the mobile termination of the repeater transitions to the non-RRC connected state and/or when the mobile termination of the repeater is in the non-RRC connected state.

20. A communication system, comprising the repeater as claimed in claim 1 and/or the network device as claimed in claim 19.
